# EUROPÄISCHE PATENTSCHRIFT

(11) **EP 0 450 624 B1**
(45) Veröffentlichungstag und Bekanntmachung des Hinweises auf die Patenterteilung: **19.09.2001**
(21) Anmeldenummer: 91105354.4
(22) Anmeldetag: 04.04.1991
(51) Int. Cl.: C08G 77/22, C08G 77/20, C08G 77/58, C09D 183/04

(54) **Polymerisierbare Kieselsäureheteropolykondensate und deren Verwendung**
Polymerisable silicic acid heteropolycondensates and their use
Hétéropolycondensats polymérisables d'acide silicique et leur emploi

(30) Priorität: 05.04.1990 DE 4011044
(43) Veröffentlichungstag der Anmeldung: 09.10.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Wolter, Herbert, W-6975 Gerchsheim (DE); Rose, Klaus, W-8710 Kitzingen (DE); Egger, Christian, W-8700 Würzburg (DE)

(56) Entgegenhaltungen:
- EP-A- 0 018 624
- EP-A- 0 223 067
- EP-A- 0 230 342
- EP-A- 0 408 047
- EP-A- 0 424 960

## Beschreibung

Die vorliegende Erfindung betrifft Kieselsäure(hetero)polykondensate und deren Verwendung. Insbesondere betrifft die vorliegende Erfindung mit ungesättigten organischen Gruppen modifizierte Polykondensate auf der Basis von hydrolytisch kondensierbaren Verbindungen des Siliciums und gegebenenfalls anderer Elemente.

Kieselsäure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozeß) sind bereits in großer Zahl bekannt (siehe z.B. DE-A-38 35 968 und 40 11 045). Derartige Kondensate finden für die verschiedensten Zwecke Verwendung, z.B. als Formmassen, Lacke für Überzüge, etc. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiete zu erschließen und zum anderen, um deren Eigenschaften für bestimmte Verwendungszwecke noch weiter zu optimieren.

Der vorliegenden Erfindung liegt somit die Aufgabe zugrunde, eine neue Klasse von Kieselsäure(hetero)polykondensaten zur Verfügung zu stellen. Insbesondere sollen diese neuen Kondensate vielfältige Variationsmöglichkeiten in sich bergen, speziell was die Natur der darin enthaltenen modifizierenden organischen Gruppen anlangt.

Gegenstand der vorliegenden Erfindung sind demgemäß mit ungesättigten organischen Gruppen modifizierte Polykondensate auf der Basis von hydrolytisch kondensierbaren Verbindungen des Siliciums und gegebenenfalls anderer Elemente aus der Gruppe B, Al, P, Sn, Pb, der Übergangsmetalle, der Lanthaniden und der Aktiniden, in denen 5 bis 100 Molprozent, auf Basis monomerer Verbindungen, der zugrundeliegenden hydrolytisch kondensierbaren Verbindungen aus Silanen der allgemeinen Formel (I) ausgewählt sind:

{XₐR_{b}Si[R'(A)_{c}]_{(4-a-b)}}ₓB (r)

in der die Reste und Indices folgende Bedeutung haben:
- X :: Wasserstoff, Halogen, Hydroxy, Alkoxy, Aryloxy, Acyloxy, Alkylcarbonyl, Alkoxycarbonyl oder -NR"₂;
- R:: Alkyl, Alkenyl, Alkinyl, Aryl, Alkylaryl oder Arylalkyl;
- R' :: Alkylen, Arylen oder Alkylenarylen;
- R":: Wasserstoff, Alkyl oder Aryl;
- A:: O, S, PR", POR", NHC(O)O oder NHC(O)NR" ;
- B:: geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoffatomen ableitet;
- a:: 1, 2 oder 3;
- b:: 0, 1 oder 2;
- c :: 0 oder 1;
- x:: ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht, mit der Maßgahe, daß die eingesetzten hydrolytisch kondensierbaren Siliciumverbindungen Keine Verbindungen der Formeln (I'), (I''), (I''') oder der Formel (I'''') gemäß Anspruch 1 sind.

Ein weiterer Gegenstand der vorliegenden Erfindung ist ein Verfahren zur Herstellung der obigen Polykondensate, bei welchem man eine oder mehrere hydrolytisch kondensierbare Verbindungen des Siliciums und gegebenenfalls anderer Elemente aus der Gruppe B, Al, P, Sn, Pb, der Übergangsmetalle, der Lanthaniden und der Aktiniden und/oder von den oben genannten Verbindungen abgeleitete Vorkondensate gegebenenfalls in Anwesenheit eines Katalysators und/oder eines Lösungsmittels durch Einwirkung von Wasser oder Feuchtigkeit hydrolytisch kondensiert, wobei 5 bis 100 Molprozent, auf der Basis monomerer Verbindungen, der hydrolytisch kondensierbaren Monomeren aus Silanen der obigen allgemeinen Formel (I) ausgewählt werden.

Schließlich sind auch ein Verfahren zur Herstellung eines Beschichtungslacks oder einer Formmasse (z.B. für den Spritzguß) aus den obigen Polykondensaten und die so erhältlichen Produkte Gegenstand dieser Erfindung.

Die erfindungsgemäßen Polykondensate zeichnen sich insbesondere dadurch aus, daß in den ihnen zugrundeliegenden Silanen der allgemeinen Formel (I) der Abstand zwischen Silicium und der reaktiven Doppelbindung beliebig einstellbar ist und diese Silane (und damit auch die Polykondensate) mehrere reaktive Doppelbindungen mit der Möglichkeit einer dreidimensionalen Vernetzung sowie andere funktionelle Gruppen enthalten können, welche eine gezielte Anpassung der erfindungsgemäßen Polykondensate an das gewünschte Anwendungsgebiet gestatten. Berücksichtigt man dann auch noch die Variationsmöglichkeiten bei den von Silanen der allgemeinen Formel (I) verschiedenen Ausgangsmaterialien, so wird offenbar, daß mit den erfindungsgemäßen Produkten eine Klasse von Polykondensaten zur Verfügung gestellt wird, die in vielfältiger Weise an vorgegebene Einsatzgebiete angepaßt werden können und die deshalb auf allen Gebieten, auf denen bereits bisher Kieselsäure(hetero)polykondensate eingesetzt wurden, Verwendung finden können, zusätzlich aber auch neue Verwendungsmöglichkeiten eröffnen, z.B. auf dem Gebiet der Optik, Elektronik, Medizin, etc.

### Definitionen

Die in der obigen allgemeinen Formel (I) und in den weiter unten angegebenen allgemeinen Formeln dargestellten Reste haben insbesondere die folgenden Bedeutungen. Alkylreste sind z. B. geradkettige, verzweigte oder cyclische Reste mit 1 bis 20, vorzugsweise 1 bis 10 Kohlenstoffatomen und vorzugsweise niedere Alkylreste mit 1 bis 6, vorzugsweise 1 bis 4 Kohlenstoffatomen. Spezielle Beispiele sind Methyl, Ethyl, n-Propyl, Isopropyl, n-Butyl, sek-Butyl, tert-Butyl, Isobutyl, n-Pentyl, n-Hexyl, Cyclohexyl, 2-Ethylhexyl, Dodecyl und Octadecyl. Die Alkenylreste sind z. B. geradkettige, verzweigte oder cyclische Reste mit 2 bis 20, vorzugsweise 2 bis 10 Kohlenstoffatomen und vorzugsweise niedere Alkenylreste mit 2 bis 6 Kohlenstoffatomen, wie Vinyl, Allyl und 2-Butenyl.

Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylalkyl-, Alkylaryl-, Alkylen-, Arylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, sek- und tert-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z. B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Nitro, Epoxy, SO₃H oder PO₄H₂.

Unter den Halogenen sind Fluor, Chlor und Brom und insbesondere Chlor bevorzugt.

Speziell für die allgemeine Formel (I) gilt: Für a ≥ 2 bzw. b = 2 können die Reste X und R jeweils dieselbe oder eine unterschiedliche Bedeutung haben.

In bevorzugten Silanen der allgemeinen Formel (I) sind X, R, R', A, a, b, c und x wie folgt definiert:
- X:: (C₁-C₄)-Alkoxy, insbesondere Methoxy und Ethoxy; oder Halogen, insbesondere Chlor;
- R:: (C₁-C₄)-Alkyl, insbesondere Methyl und Ethyl;
- R' :: (C₁-C₄)-Alkylen, insbesondere Methylen und Propylen;
- A:: O oder S, insbesondere S;
- a:: 1, 2 oder 3;
- (4-a-b):: 0 für c = 0 und 1 für c = 1;
- c :: 0 oder 1, vorzugsweise 1;
- x:: 1 oder 2.

Besonders bevorzugt ist es, wenn die Struktureinheit mit dem Index x aus Triethoxysilyl, Methyldiethoxysilyl, Methyldichlorsilyl, 3-Methyldimethoxysilyl-propylthio, 3-Trimethoxysilyl-propylthio, 3-Triethoxysilylpropylthio,Methyldiethoxysilyl-methylthio und Ethoxydimethylsilyl-methylthio ausgewählt ist.

Der Rest B leitet sich ab von einer substituierten oder unsubstituierten Verbindung B' mit mindestens einer bzw. mindestens zwei C=C-Doppelbindungen, z. B. Vinyl-, Allyl-, Acryl- und/oder Methacrylgruppen, und 5 bis 50, vorzugsweise 6 bis 30 Kohlenstoffatomen. Vorzugsweise leitet sich B ab von einer substituierten oder unsubstituierten Verbindung B' mit zwei oder mehreren Acrylat- und/oder Methacrylatgruppen (derartige Verbindungen werden im folgenden als (Meth)acrylate bezeichnet).

Falls die Verbindung B' substituiert ist, können die Substituenten unter den oben genannten Substituenten ausgewählt sein.

Zur Herstellung von erfindungsgemäß als Ausgangsmaterialien verwendeten Mono(meth)acryloxysilanen werden Verbindungen B' mit zwei C=C-Doppelbindungen, zur Herstellung von Poly(meth)acryloxysilanen solche mit mindestens drei C=C-Doppelbindungen eingesetzt. Spezielle Beispiele für derartige Verbindungen sind die folgenden (Meth) acrylate:

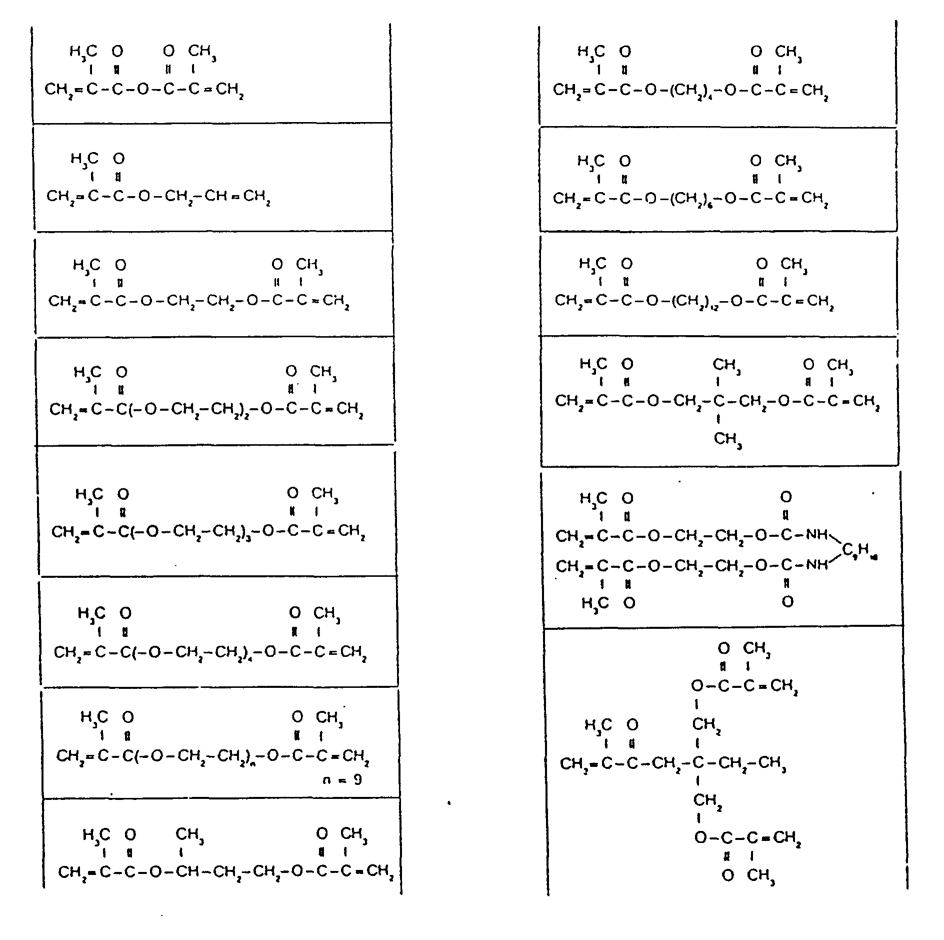

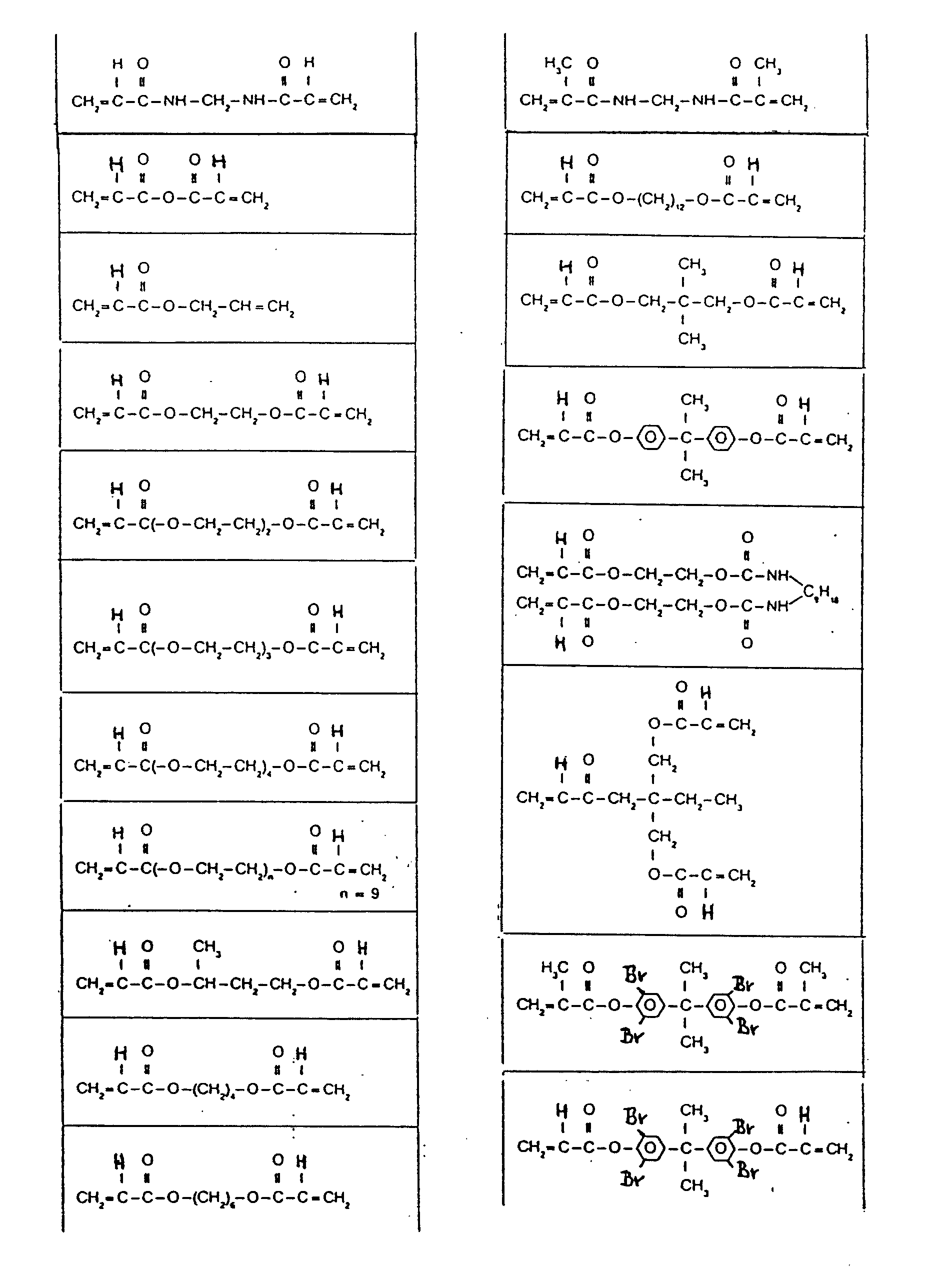

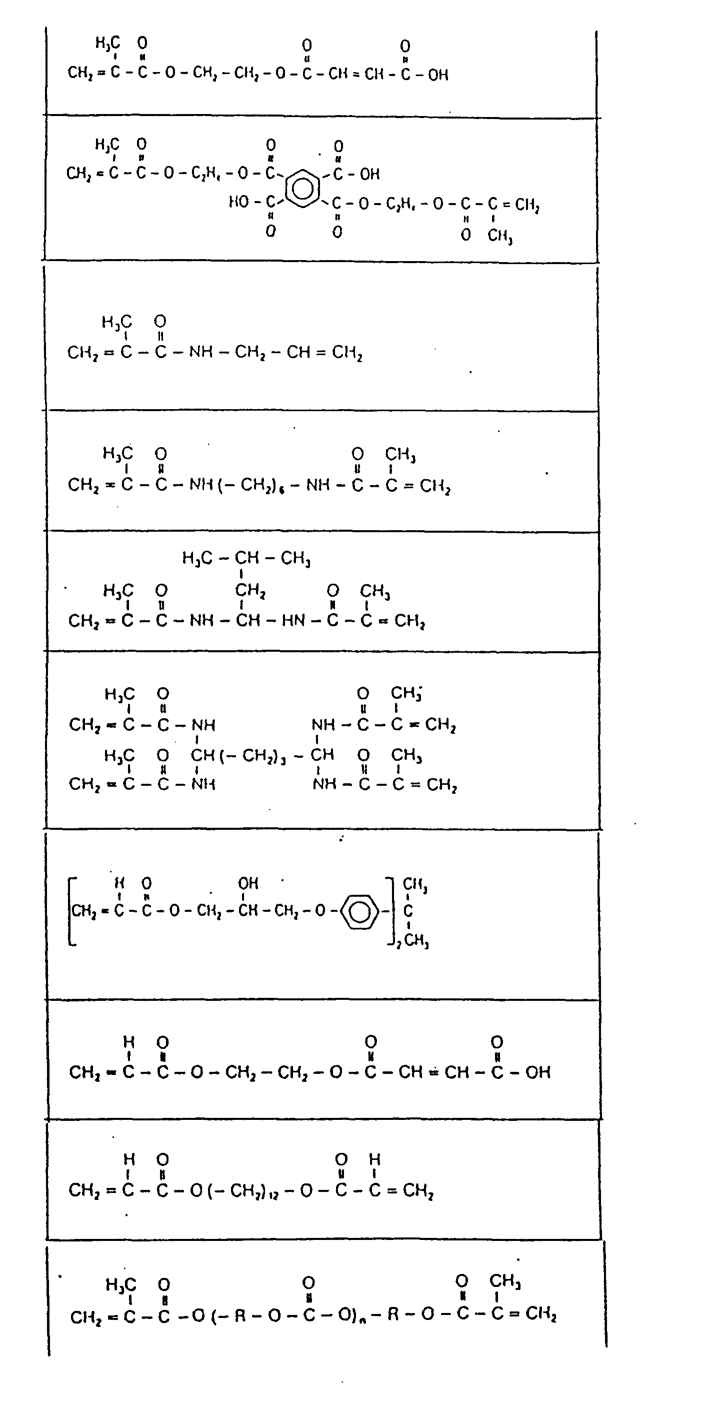

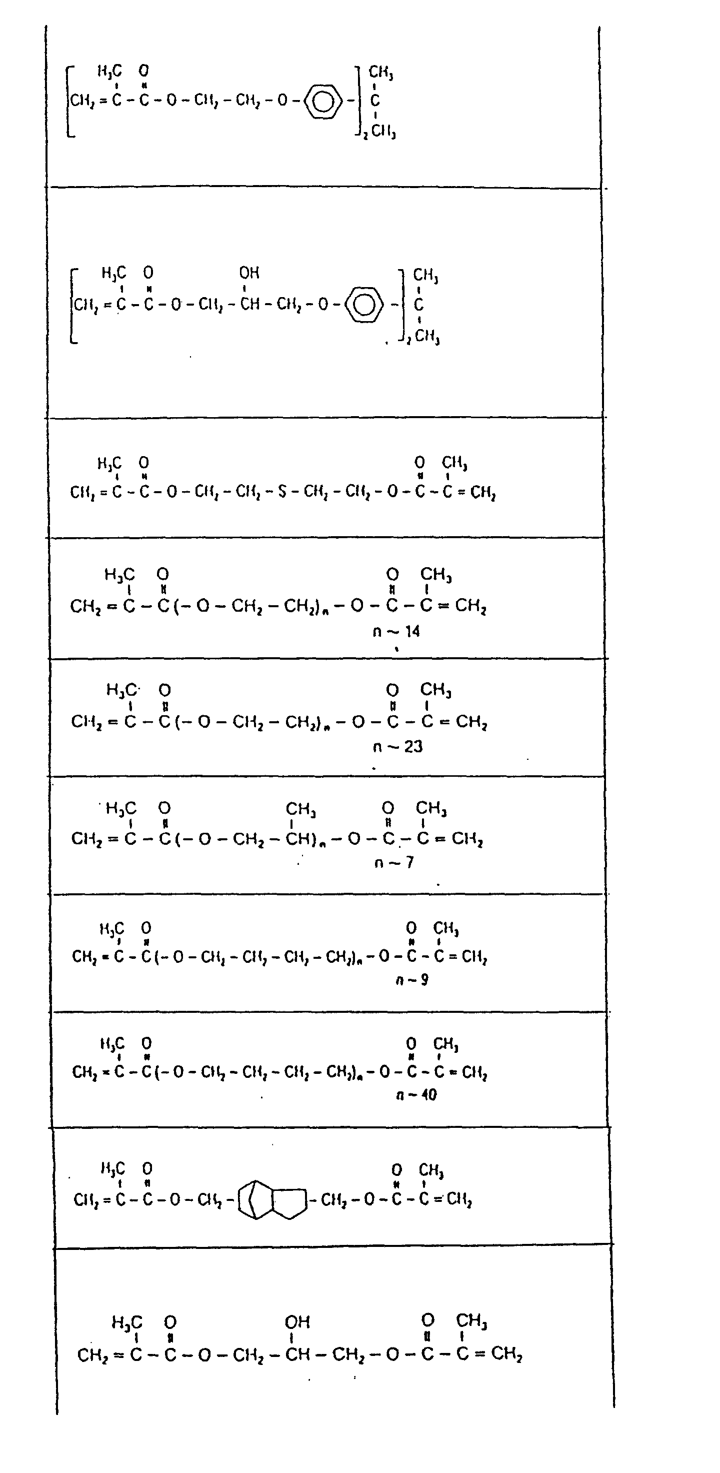

Bevorzugte Acrylate sind z.B. die Acrylsäureester von Trimethylolpropan, Pentaerythrit und Dipentaerythrit. Konkrete Beispiele hierfür sind Trimethylolpropantriacrylat (TMPTA), Pentaerythrittriacrylat (PETA), Pentaerythrittetraacrylat und Dipentaerythritpentaacrylat.

Weitere Beispiele für bevorzugte (Meth)acrylate sind solche der Formel 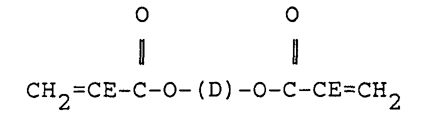 in der E für H oder CH₃ steht und D eine organische Gruppe ist, wie sie z. B. in den oben genannten speziellen Verbindungen und/oder in den in den folgenden Beispielen beschriebenen Verbindungen enthalten ist.

So kann sich D z.B. von C₂-C₆-Alkandiolen (z.B. Ethylenglykol, Propylenglykol, Butylenglykol, 1,6-Hexandiol), Polyethylenglykolen oder Polypropylenglykolen (z.B. solchen der Formel HO-(CH₂-CHR"'-O)ₙH, worin R"' H oder CH₃ und n = 2 - 10 ist) oder von gegebenenfalls substituiertem und/oder alkoxyliertem (z.B. ethoxyliertem und/oder propoxyliertem) Bisphenol A ableiten.

Die Silane der allgemeinen Formel (I) können z. B. dadurch hergestellt werden, daß man
a) ein Silan der allgemeinen Formel (II):

   XₐR_{b}SiR'Y (II)

   in der X, R, R', a und b die vorstehend genannte Bedeutung haben, (a+b) = 3 und Y die Gruppe SH, PR"H oder POR"H bedeutet, einer Additionsreaktion mit einer Verbindung B' mit mindestens zwei C=C-Doppelbindungen unterwirft; oder
b) ein Silan der allgemeinen Formel (III):

   XₐR_{b}SiR'NCO (III)

   in der X, R, R', a und b die vorstehend genannte Bedeutung haben und (a+b) = 3, einer Kondensationsreaktion mit einer hydroxyl- oder amino-substituierten Verbindung B' mit mindestens einer C=C-Doppelbindungen unterwirft; oder
c) ein Silan der allgemeinen Formel (IV):

   XₐR_{b}SiH (IV)

   in der X, R, R', a und b die vorstehend genannte Bedeutung haben und (a+b) = 3, einer Hydrosilylierungsreaktion mit einer Verbindung B' mit mindestens zwei C=C-Doppelbindungen unterwirft.

Die Silane der allgemeinen Formeln (II) bis (IV) sind entweder im Handel erhältlich oder lassen sich nach bekannten Methoden herstellen; vgl. W. Noll, "Chemie und Technologie der Silicone", Verlag Chemie GmbH, Weinheim/Bergstraße (1968).

Bei der Verfahrensvariante (a) erfolgt die Silanisierung über eine der C=C-Doppelbindungen der Verbindung B', wobei z.B. die Mercaptogruppe eines entsprechenden Silans im Sinne einer basisch katalysierten Michael-Reaktion unter Bildung einer Thioether-Einheit addiert wird:

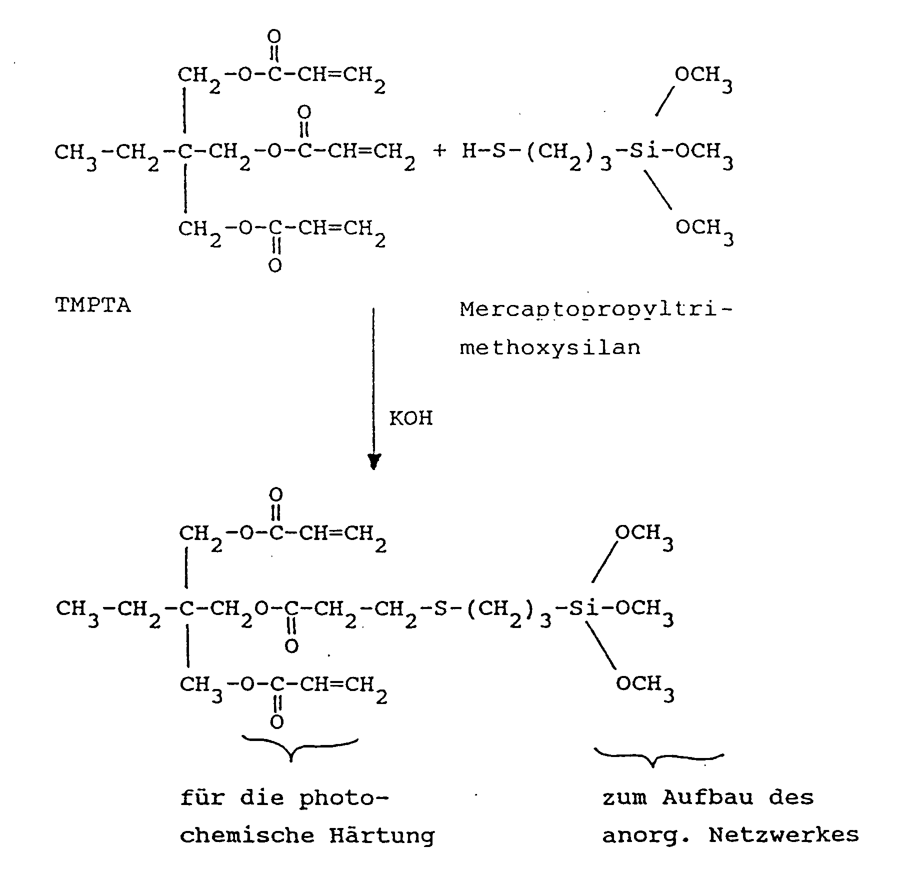

### Bild 1. Reaktionsprinzip der Thioladdition

Die Phosphinaddition erfolgt in analoger Weise.

Bei der Verfahrensvariante (b) entsteht durch Silanisierung der hydroxyl- (oder amino-)substituierten Ausgangsverbindung B' mit einem Isocyanatosilan eine Urethan- (oder Harnstoff-)Struktur:

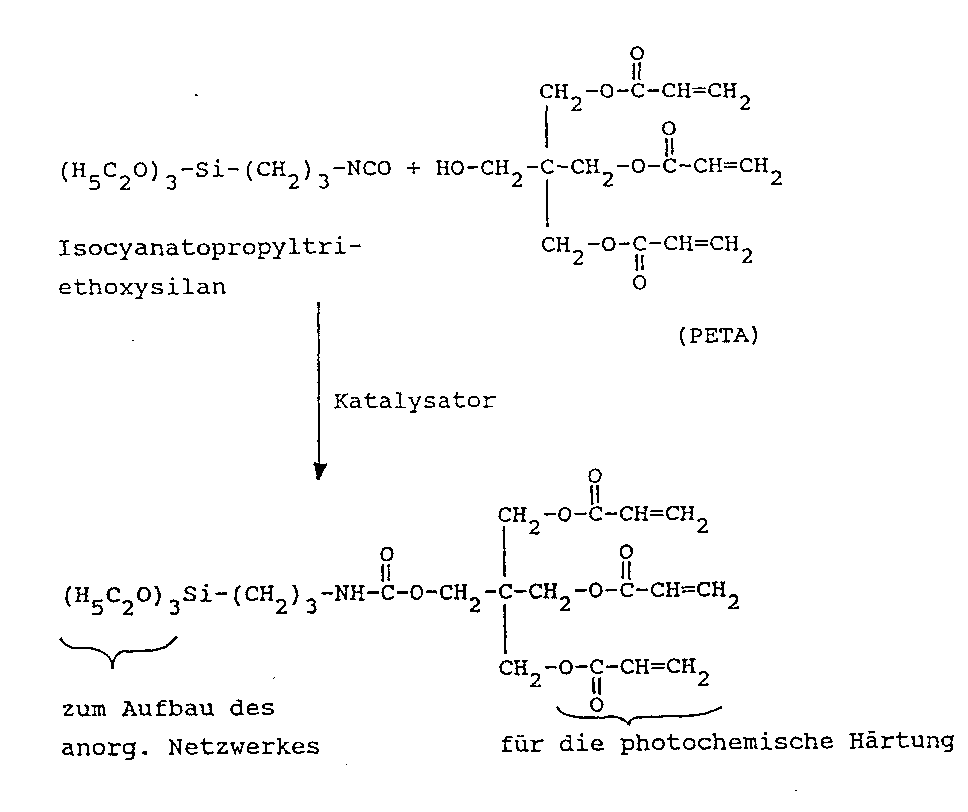

### Bild 2. Reaktionsprinzip der Urethanbildung

Bei der Verfahrensvariante (c) erfolgt die Hydrosilylierung schematisch nach folgender Reaktionsgleichung:

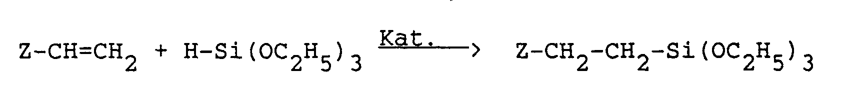

### (Verbindung B')

### Bild 3. Reaktionsprinzip der Hydrosilylierung

Die wie oben hergestellten Silane der Formel (I) müssen zur Herstellung der erfindungsgemäßen Polykondensate nicht unbedingt extra isoliert werden. Vielmehr ist es sogar bevorzugt, in einem Eintopf-Verfahren diese Silane zunächst herzustellen und dann - gegebenenfalls nach Zusatz weiterer hydrolysierbarer Verbindungen - hydrolytisch zu kondensieren.

Neben den Silanen der allgemeinen Formel (I) können noch weitere hydrolytisch kondensierbare Verbindungen des Siliciums und/oder der oben angegebenen Elemente (vorzugsweise Al, Ti, Zr, V, B, Sn und/oder Pb und besonders bevorzugt Al, Ti, Zr und V) entweder als solche oder bereits in vorkondensierter Form zur Herstellung der erfindungsgemäßen Polykondensate herangezogen werden.

Bevorzugt ist es, wenn mindestens 50 Molprozent, insbesondere mindestens 80 Molprozent und speziell mindestens 90 Molprozent, auf Basis monomerer Verbindungen, der zur Herstellung der erfindungsgemäßen Polykondensate herangezogenen Ausgangsmaterialien Siliciumverbindungen sind.

Ebenso ist es bevorzugt, wenn den erfindungsgemäßen Polykondensaten mindestens 10 Molprozent, z.B. 25 bis 100 Molprozent, insbesondere 50 bis 100 Molprozent und speziell 75 bis 100 Molprozent, jeweils auf Basis monomerer Verbindungen, an einem oder mehreren Silanen der allgemeinen Formel (I) zugrundeliegen.

Unter den von Silanen der allgemeinen Formel (I) verschiedenen hydrolytisch kondensierbaren Siliciumverbindungen, die gegebenenfalls eingesetzt werden können, sind solche der allgemeinen Formel (V) besonders bevorzugt:

X_{a'}SiR_{b'} (V)

in der X und R wie oben definiert sind, a' eine ganze Zahl von 1 bis 4, insbesondere 2 bis 4, ist und b' für 0, 1, 2 oder 3, vorzugsweise 0, 1 oder 2 steht.

Besonders bevorzugte Verbindungen der allgemeinen Formel (V) sind solche, in denen die Reste X, die gleich oder verschieden sein können, ausgewählt sind aus Halogen (F, Cl, Br und I, insbesondere Cl und Br), Alkoxy (insbesondere C₁₋₄-Alkoxy, wie z.B. Methoxy, Ethoxy, n-Propoxy, i-Propoxy und Butoxy), Aryloxy (insbesondere C₆₋₁₀-Aryloxy, z.B. Phenoxy), Acyloxy (insbesondere C₁₋₄-Acyloxy, wie z.B. Acetoxy und Propionyloxy) und Hydroxy, die Reste R, die gleich oder verschieden sein können, ausgewählt sind aus Alkyl (insbesondere C₁₋₄-Alkyl, wie z.B. Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄-Alkinyl, wie Acetylenyl und Propargyl) und Aryl (insbesondere C₆₋₁₀-Aryl, wie z.B. Phenyl und Naphthyl), wobei die soeben genannten Gruppen (mit Ausnahme von Halogen und Hydroxy) gegebenenfalls einen oder mehrere unter den Reaktionsbedingungen inerte Substituenten, wie z.B. Halogen und Alkoxy, aufweisen können. Die obigen Alkylreste schließen auch die entsprechenden cyclischen und Aryl-substituierten Reste, wie z.B. Cyclohexyl und Benzyl, ein während die Alkenyl- und Alkinylgruppen ebenfalls cyclisch sein können und die genannten Arylgruppen auch Alkarylgruppen (wie Tolyl und Xylyl) mit einschließen sollen.

Neben den oben genannten besonders bevorzugten Resten X können als weitere, ebenfalls geeignete Gruppen genannt werden Wasserstoff und Alkoxyreste mit 5 bis 20, insbesondere 5 bis 10 Kohlenstoffatomen und Halogen- und Alkoxy-substituierte Alkoxygruppen (wie z.B. β-Methoxyethoxy). Weitere geeignete Gruppen R sind geradkettige, verzweigte oder cyclische Alkyl-, Alkenyl- und Alkinylreste mit 5 bis 20, insbesondere 5 bis 10 Kohlenstoffatomen, wie z.B. n-Pentyl, n-Hexyl, Dodecyl und Octadecyl, sowie Gruppen, die über Epoxy-, Mercapto- oder Aminoreste verfügen.

Sowohl für die Verbindungen der allgemeinen Formel (I) als auch diejenigen der allgemeinen Formel (V) gilt:

Da die Reste X im Endprodukt nicht vorhanden sind, sondern durch Hydrolyse verlorengehen, wobei das Hydrolyseprodukt in der Regel früher oder später auch in irgendeiner geeigneten Weise entfernt werden muß, sind Reste X besonders bevorzugt, die keinen Substituenten tragen und zu Hydrolyseprodukten mit niedrigem Molekulargewicht, wie z.B. niederen Alkoholen, wie Methanol, Ethanol, Propanol, n-, i-, sek- und tert-Butanol, führen.

Die Verbindungen der Formeln (I) und (V) können ganz oder teilweise in Form von Vorkondensaten eingesetzt werden, d.h. Verbindungen, die durch teilweise Hydrolyse der Verbindungen der Formeln (I) und (V), entweder allein oder im Gemisch mit anderen hydrolysierbaren Verbindungen, wie sie weiter unten näher beschrieben werden, entstanden sind. Derartige, im Reaktionsmedium vorzugsweise lösliche, Oligomere können geradkettige oder cyclische, niedermolekulare Teilkondensate (Polyorganosiloxane) mit einem Kondensationsgrad von z.B. etwa 2 bis 100 (z.B. 2 bis 20), insbesondere etwa 6 bis 10, sein.

Konkrete Beispiele für (zum Großteil im Handel erhältliche) Verbindungen der allgemeinen Formel (V), die erfindungsgemäß bevorzugt eingesetzt werden, sind Verbindungen der folgenden Formeln:
Si(OCH₃)₄, Si(OC₂H₅)₄, Si(O-n- oder i-C₃H₇)₄
Si(OC₄H₉)₄, SiCl₄, HSiCl₃, Si(OOCCH₃)₄
CH₃-SiCl₃, CH₃-Si(OC₂H₅)₃, C₂H₅-SiCl₃, C₂H₅-Si(OC₂H₅)₃,
C₃H₇-Si(OCH₃)₃, C₆H₅-Si(OCH₃)₃, C₆H₅-Si(OC₂H₅)₃,
(CH₃O)₃Si-C₃H₆-Cl,
(CH₃)₂SiCl₂, (CH₃)₂Si(OCH₃)₂, (CH₃)₂Si(OC₂H₅)₂,
(CH₃)₂Si(OH)₂, (C₆H₅)₂SiCl₂, (C₆H₅)₂Si(OCH₃)₂,
(C₆H₅)₂Si(OC₂H₅)₂, (i-C₃H₇)₃SiOH,
CH₂=CH-Si(OOCCH₃)₃,
CH₂=CH-SiCl₃, CH₂=CH-Si(OCH₃)₃, CH₂=CH-Si(OC₂H₅)₃,
CH₂=CH-Si(OC₂H₄OCH₃)₃, CH₂=CH-CH₂-Si(OCH₃)₃,
CH₂=CH-CH₂-Si(OC₂H₅)₃,
CH₂=CH-CH₂-Si(OOCCH₃)₃,
CH₂=C(CH₃)-COO-C₃H₇-Si(OCH₃)₃,
CH₂=C(CH₃)-COO-C₃H₇-Si(OC₂H₅)₃,
(C₂H₅O)₃Si-C₆H₄-NH₂, CH₃(C₂H₅O)₂Si-(CH₂)₄-NH₂,
(C₂H₅O)₃Si-C₃H₆-NH₂, (CH₃)₂(C₂H₅O)Si-CH₂-NH₂,
(C₂H₅O)₃Si-C₃H₆-CN, (CH₃O)₃Si-C₄H₈-SH, (CH₃O)₃Si-C₆H₁₂-SH,
(CH₃O)₃Si-C₃H₆-SH, (C₂H₅O)₃Si-C₃H₆-SH,
(CH₃O)₃Si-C₃H₆-NH-C₂H₄-NH₂,
(CH₃O)₃Si-C₃H₆-NH-C₂H₄-NH-C₂H₄-NH₂,

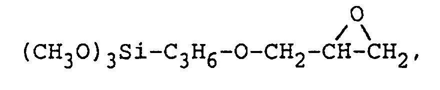

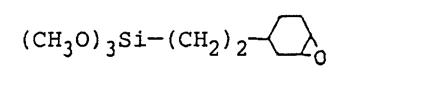

Diese Silane lassen sich nach bekannten Methoden herstellen; vergleiche W. Noll, a.a.O.

Das Verhältnis der Siliciumverbindungen mit vier, drei, zwei bzw. einem hydrolysierbaren Rest X (bzw. auch der von Siliciumverbindungen verschiedenen hydrolysierbaren Verbindungen) untereinander richtet sich vor allem nach den gewünschten Eigenschaften des resultierenden Polykondensats bzw. des daraus hergestellten Endprodukts.

Unter den gegebenenfalls zur Herstellung der Polykondensate verwendeten hydrolysierbaren Aluminiumverbindungen sind diejenigen besonders bevorzugt, die die allgemeine Formel (VI) :

AlX'₃ (VI)

aufweisen, in der die Reste X', die gleich oder verschieden sein können, ausgewählt sind aus Halogen, Alkoxy, Alkoxycarbonyl und Hydroxy. Hinsichtlich der näheren (bevorzugten) Definition dieser Reste kann auf die Ausführungen im Zusammenhang mit erfindungsgemäß geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind die Aluminiumalkoxide und -halogenide. In diesem Zusammenhang können als konkrete Beispiele genannt werden
Al(OCH₃)₃, Al(OC₂H₅)₃, Al(O-n-C₃H₇)₃,
Al(O-i-C₃H₇)₃, Al(OC₄H₉)₃, Al(O-i-C₄H₉)₃,
Al(O-sek-C₄H₉)₃, AlCl₃, AlCl(OH)₂

Bei Raumtemperatur flüssige Verbindungen, wie z.B. Aluminium-sek-butylat und Aluminium-isopropylat, werden besonders bevorzugt.

Geeignete hydrolysierbare Titan- und Zirkoniumverbindungen, die erfindungsgemäß eingesetzt werden können, sind solche der allgemeinen Formel (VII):

MX_{a'}R_{b'} (VII)

in der M Ti oder Zr bedeutet und X, R, a' und b' wie im Falle der allgemeinen Formel (V) definiert sind. Dies gilt auch für die bevorzugten Bedeutungen von X und R. Besonders bevorzugt handelt es sich bei den Verbindungen der Formel (VII) um solche, in denen a' 4 ist.

Wie im Falle der obigen Al-Verbindungen können auch komplexierte Ti- und Zr-Verbindungen eingesetzt werden. Zusätzliche bevorzugte Komplexbildner sind hier Acrylsäure und Methacrylsäure.

Konkrete Beispiele für erfindungsgemäß einsetzbare Zirkonium- und Titanverbindungen sind die folgenden:
TiCl₄, Ti(OC₂H₅)₄, Ti(OC₃H₇)₄,
Ti(O-i-C₃H₇)₄, Ti(OC₄H₉)₄, Ti(2-ethylhexoxy)₄;
ZrCl₄, Zr(OC₂H₅)₄, Zr(OC₃H₇)₄, Zr(O-i-C₃H₇)₄, Zr(OC₄H₉)₄, ZrOCl₂, Zr(2-ethylhexoxy)₄

Weitere hydrolysierbare Verbindungen, die zur Herstellung der erfindungsgemäßen Polykondensate eingesetzt werden können, sind z.B. Bortrihalogenide und Borsäureester (wie z.B. BCl₃, B(OCH₃)₃ und B(OC₂H₅)₃), Zinntetrahalogenide und Zinntetraalkoxide (wie z.B. SnCl₄ und Sn(OCH₃)₄) und Vanadylverbindungen, wie z.B. VOCl₃ und VO(OCH₃)₃.

Zum Aufbau der erfindungsgemäßen Polykondensate werden die Silane der allgemeinen Formel (I) gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A-27 58 414, 27 58 415, 30 11 761, 38 26 715 und 38 35 968 beschrieben ist und weiter unten noch näher erläutert wird.

Zum Aufbau eines organischen Netzwerkes können die erfindungsgemäßen Polykondensate gegebenenfalls unter Zusatz anderer copolymerisierbarer Komponenten (siehe unten) polymerisiert werden. Die Polymerisation kann z.B. thermisch oder photochemisch unter Einsatz von Methoden erfolgen, wie sie in den DE-A-31 43 820, 38 26 715 und 38 35 968 beschrieben sind und ebenfalls weiter unten noch näher erläutert werden.

Der Verlauf der Polykondensation kann z.B. mittels Karl-Fischer-Titration (Bestimmung des Wasserverbrauchs bei der Hydrolyse), der Ablauf der (z.B. photochemischen) Härtung IR-spektroskopisch untersucht werden (Intensität und Relation der C=C und C=O Banden).

Wie bereits erwähnt, kann die Herstellung der erfindungsgemäßen Polykondensate in auf diesem Gebiet üblicher Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, die stöchiometrisch erforderliche Menge Wasser bzw. gegebenenfalls einen Überschuß an Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt. Bei Anwesenheit der reaktiveren Verbindungen von Al, Ti und Zr empfiehlt sich in der Regel eine stufenweise Zugabe des Wassers. Unabhängig von der Reaktivität der anwesenden Verbindungen erfolgt die Hydrolyse in der Regel bei Temperaturen zwischen -20 und 130°C, vorzugsweise zwischen 0°C und 30°C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen in das Reaktionssystem einzutragen. Als besonders geeignet hat sich in vielen Fällen die Eintragung der Wassermengen in das Reaktionsgemisch mit Hilfe von feuchtigkeitsbeladenen Adsorbentien, z.B. Molekularsieben, und wasserhaltigen organischen Lösungsmitteln, z.B. 80%igem Ethanol, erwiesen. Die Wasserzugabe kann auch über eine Reaktion erfolgen, bei der Wasser gebildet wird, z.B. bei der Esterbildung aus Säure und Alkohol.

Wenn ein Lösungsmittel verwendet wird, kommen neben den niederen aliphatischen Alkoholen (z.B. Ethanol und Isopropanol) auch Ketone, vorzugsweise niedere Dialkylketone, wie Aceton und Methylisobutylketon, Ether, vorzugsweise niedere Dialkylether wie Diethylether und Dibutylether, THF, Amide, Ester, insbesondere Essigsäureethylester, Dimethylformamid, und deren Gemische in Frage.

Erfindungsgemäß nicht notwendigerweise, aber dennoch bevorzugt eingesetzte Hydrolyse- und Kondensationskatalysatoren sind Protonen abspaltende Verbindungen. Beispiele hierfür sind organische und anorganische Säuren, wie Salzsäure, Ameisensäure und Essigsäure, wobei Salzsäure als Katalysator besonders bevorzugt wird. Im Falle einer basischen Katalyse sind geeignete Katalysatoren z.B. NH₃, NaOH oder KOH. Auch eine Katalyse mit Fluoridionen ist möglich, z.B. unter Einsatz von HF, KF oder NH₄F.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Siliciumverbindungen verschiedenen hydrolysierbaren Verbindungen Ausfällungen während der Hydrolyse und Polykondensation so weit wie möglich zu vermeiden, wird es in diesem Fall bevorzugt, die Wasserzugabe in mehreren Stufen, z.B. in drei Stufen, durchzuführen. Dabei wird in der ersten Stufe z.B. ein Zehntel bis ein Zwanzigstel der zur Hydrolyse stöchiometrisch benötigten Wassermenge zugegeben. Nach kurzem Rühren folgt die Zugabe von einem Fünftel bis zu einem Zehntel der stöchiometrischen Wassermenge und nach weiterem kurzen Rühren wird schließlich eine stöchiometrische Wassermenge zugegeben, so daß am Schluß ein leichter Wasserüberschuß vorliegt.

Die Kondensationszeit richtet sich nach den jeweiligen Ausgangskomponenten und deren Mengenanteilen, dem gegebenenfalls verwendeten Katalysator, der Reaktionstemperatur, etc. Im allgemeinen erfolgt die Polykondensation bei Normaldruck, sie kann jedoch auch bei erhöhtem oder verringertem Druck durchgeführt werden.

Das so erhaltene Polykondensat kann entweder als solches oder nach teilweiser oder nahezu vollständiger Entfernung des verwendeten Lösungsmittels bzw. des während der Reaktion gebildeten Lösungsmittels weiterverarbeitet werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur (bis maximal 80°C) so weit eingedickt werden, daß sie noch problemlos mit einem anderen Lösungsmittel aufgenommen werden kann.

Sollen die erfindungsgemäßen Polykondensate als Lacke für die Beschichtung (z.B. von Kunststoffen wie z.B. PVC, Polycarbonat, Polymethylmethacrylat, Polyethylen, Polystyrol etc., von Glas, Papier, Holz, Keramik, Metall usw.) eingesetzt werden, so können diesen spätestens vor der Verwendung gegebenenfalls noch übliche Lack-Additive zugegeben werden, wie z.B. Färbemittel (Pigmente und Farbstoffe), Füllstoffe, Oxidationsinhibitoren, Verlaufsmittel, UV-Absorber, Stabilisatoren und dergleichen. Auch Zusätze zur Erhöhung der Leitfähigkeit (z.B. Graphitpulver, Silberpulver etc.) verdienen in diesem Zusammenhang Erwähnung. In Falle der Verwendung als Formmasse kommt insbesondere die Zugabe von anorganischen und/oder organischen Füllstoffen in Frage, wie z.B. (Glas-)Fasern, Mineralien etc.

Ist eine Aushärtung durch Bestrahlung (UV oder IR-Strahlung) und/oder thermische Energie beabsichtigt, so kann ein geeigneter Initiator zugesetzt werden.

Als Photoinitiatoren können z.B. die im Handel erhältlichen eingesetzt werden. Beispiele hierfür sind Irgacure 184 (1-Hydroxycyclohexylphenylketon), Irgacure 500 (1-Hydroxycyclohexylphenylketon, Benzophenon) und andere von der Firma Ciba-Geigy erhältliche Photoinitiatoren vom Irgacure-Typ; Darocur 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon, Dibenzosuberon und Campherchinon. Der letztgenannte Initiator eignet sich besonders bei Bestrahlung mit Licht im sichtbaren Bereich.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, tert-Butylperbenzoat sowie Azobisisobutyronitril.

Der Initiator kann in üblichen Mengen zugegeben werden. So kann z.B. einer Mischung, die 30 bis 50 Gewichtsprozent Feststoff (Polykondensat) enthält, Initiator in einer Menge von z.B. 0,5 bis 5 Gewichtsprozent, insbesondere 1 bis 3 Gewichtsprozent, bezogen auf die Mischung, zugesetzt werden.

Ein gegebenenfalls mit einem Photoinitiator versehener Lack auf der Basis von erfindungsgemäßen Polykondensaten kann dann auf ein geeignetes Substrat aufgebracht werden. Für diese Beschichtung können übliche Beschichtungsverfahren angewandt werden, z.B. Tauchen, Fluten, Gießen, Schleudern, Walzen, Spritzen, Aufstreichen, elektrostatisches Spritzen und Elektrotauchlackierung. Erwähnt werden soll hier noch, daß der Lack nicht notwendigerweise lösungsmittelhaltig sein muß. Insbesondere bei Verwendung von Ausgangssubstanzen (Silanen) mit zwei Alkoxygruppen am Si-Atom kann auch ohne Zusatz von Lösungsmitteln gearbeitet werden.

Vor der Härtung wird der aufgetragene Lack vorzugsweise abtrocknen gelassen. Danach kann er, abhängig von der Art bzw. Anwesenheit eines Initiators, thermisch oder durch Bestrahlen (z.B. mit einem UV-Strahler, einem Laser, einem Elektronenstrahl, einer Lichtquelle, die Strahlung im sichtbaren Bereich aussendet, usw.) in an sich bekannter Weise gehärtet werden. Selbstverständlich sind auch Kombinationen von Aushärtungsmethoden möglich, z.B UV/IR oder UV/thermisch.

Besonders bevorzugt wird die Härtung des aufgetragenen Lacks durch Bestrahlung in Anwesenheit eines Photoinitiators. In diesem Fall kann es sich von Vorteil erweisen, nach der Strahlungshärtung eine thermische Härtung durchzuführen, insbesondere um noch vorhandenes Lösungsmittel zu entfernen oder noch weitere reaktive Gruppen in die Härtung miteinzubeziehen. Insbesondere Epoxygruppen sprechen in dieser Beziehung auf eine thermische Behandlung besser an als auf eine Bestrahlungsbehandlung.

Obwohl in den erfindungsgemäßen Polykondensaten bereits ungesättigte Gruppen vorhanden sind (zumindest solche, die sich vom Rest B ableiten), kann es sich in bestimmten Fällen als vorteilhaft erweisen, den erfindungsgemäßen Produkten vor oder bei ihrer Weiterverarbeitung (Härtung) noch weitere Verbindungen (vorzugsweise rein organischer Natur) mit ungesättigten Gruppen zuzugeben. Bevorzugte Beispiele für derartige Verbindungen sind Verbindungen B', (Meth)acrylsäure und deren Derivate, insbesondere (Meth)acrylsäureester von (vorzugsweise einwertigen) Alkoholen (z.B. C₁₋₄-Alkanolen), (Meth)acrylnitril, Styrol, N-Vinylpyrrolidon und Mischungen derselben. Im Falle der Verwendung der erfindungsgemäßen Polykondensate zur Herstellung eines Beschichtungslacks können derartige Verbindungen gleichzeitig als Lösungen bzw. Verdünnungsmittel wirken.

Die Herstellung von Formkörpern auf der Basis der erfindungsgemäßen Polykondensate bzw. Formmassen kann mit jeder der auf diesem Gebiet gebräuchlichen Methoden erfolgen, z.B. durch Spritzguß, Formgießen, Extrusion etc. Auch zur Herstellung von Kompositmaterialien (z.B. mit Glasfaserverstärkung) sind die erfindungsgemäßen Produkte geeignet.

Die erfindungsgemäßen Polykondensate stellen hochreaktive Systeme dar, die z. B. bei UV-Bestrahlung innerhalb von Sekundenbruchteilen zu mechanisch stabilen Überzügen aushärten. Auch die Aushärtung zu Formkörpern kann im Bereich von wenigen Sekunden bis Minuten erfolgen.

Sie sind über eine einfache Kondensationsreaktion herstellbar und können durch geeignete Auswahl der Ausgangsverbindungen (insbesondere solchen der allgemeinen Formel (I)) eine variierbare Anzahl reaktiver Gruppen unterschiedlichster Funktionalität aufweisen.

Über die Anzahl von hydrolysierbaren Gruppen in den Ausgangssilanen, den Abstand zwischen Silicium und funktioneller organischer Gruppe, d.h. über die Kettenlänge, und über die Anwesenheit weiterer funktioneller Gruppen in dieser Kette können die mechanischen (z. B. Flexibilität, Kratz- und Abriebfestigkeit) und physikalisch-chemischen Eigenschaften (Adsorption, Farbe, Absorptionsverhalten, Brechzahl, Haftung, Benetzungsverhalten etc.) der (End-)Produkte beeinflußt werden.

Je nach Art und Anzahl der hydrolysierbaren Gruppen (z. B. Alkoxygruppen) können in den erfindungsgemäßen Polykondensaten und den daraus hergestellten Endprodukten z.B. silicon- oder glasartige Eigenschaften eingestellt werden.

Die erfindungsgemäßen Polykondensate eignen sich z. B. zur Verwendung als bzw. in Beschichtungs-, Füllstoff- oder Bulkmaterialien, Klebstoffe(n), Haftvermittler(n), Dichtungsmassen und Spritzgießmassen. Beschichtungen und Formkörper aus den erfindungsgemäßen Polykondensaten haben den Vorteil, daß sie photochemisch strukturierbar sind (siehe z.B. DE-A-38 35 968). Spezielle Anwendungsgebiete sind z. B. die Beschichtung von Substraten aus Metall, Kunststoff, Papier, Keramik, Holz, Glas, Textilien etc. durch Tauchen, Gießen, Streichen, Spritzen, elektrostatisches Spritzen, Elektrotauchlackierung etc. und der Einsatz für optische, optoelektrische oder elektronische Komponenten. Auch die mögliche Verwendung zur Herstellung kratzfester, abriebfester und/oder Korrosionsschutz-Beschichtungen verdient in diesem Zusammenhang Erwähnung.

Die folgenden Herstellungsbeispiele und Beispiele erläutern die Erfindung, ohne deren Umfang zu beschränken.

In diesen Herstellungsbeispielen werden die folgenden Ausgangsmaterialien verwendet:
Silan I: HS-(CH₂)₃-SiCH₃(OCH₃)₂
Silan II: HS-CH₂-SiCH₃(OC₂H₅)₂
Silan III : HS-(CH₂)₃-Si(OCH₃)₃
Silan IV: HSiCH₃(OC₂H₅)₂
Silan V: HSi(OC₂H₅)₃
Silan VI: HSiCH₃Cl₂
Silan VII : HS-CH₂-Si(CH₃)₂OC₂H₅
Silan VIII: OCN-(CH₂)₃-Si(OC₂H₅)₃
Acrylat A: 1,6-Hexandioldiacrylat
Acrylat B: Tripropylenglykoldiacrylat
Acrylat C: 2,2-Di[4-(2-hydroxyethoxy)phenyl]propandiacrylat
Acrylat D: Di(trimethylolpropan)tetraacrylat
Acrylat E: 1,2,3-Tri(3-hydroxypropoxy)propantriacrylat
Acrylat F: Tris(2-hydroxyethyl)isocyanurat-triacrylat
Acrylat G: 2,2-Di[4-(2-hydroxyethoxy)phenyl]-propandimethacrylat
Acrylat H: 2,2-Di[3,5-dibrom-4-(2-hydroxyethoxy)phenyl]-propandimethacrylat
Acrylat I: Pentaerythrittetraacrylat
Acrylat J: Trimethylolpropantriacrylat
Acrylat K: Pentaerythrittriacrylat
Acrylat L: Dipentaerythritpentaacrylat
Acrylat M: Bisphenol-A-dimethacrylat
Acrylat N: Trimethylolpropantrimethacrylat
Acrylat O: Glycerin-1,3-dimethacrylat

### Herstellungsbeispiel 1

Herstellung der Verbindung der Formel

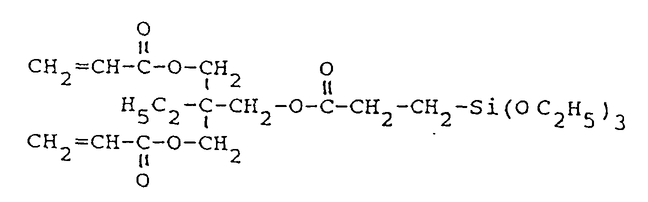

### Verbindung (1)

0,1 mol (29,5 g, 26,6 ml) Acrylat J werden in 100 ml Lösungsmittel (z. B. Ethanol, Benzol, Cyclohexan, Diethylether oder Methyl-tert-butylether) mit 0,1 mol (16,5 g, 18,8 ml) Silan V versetzt. Zu dieser Lösung gibt man 0,3 mmol (930 mg) des Katalysators [Rh(CO)Cl(PPh₂CH₂CH₂SiO_{1.5}].40 SiO₂ (BET-Oberfläche 723,5 m², mittlerer Porenradius 1,94 nm, mittleres Porenvolumen 0,70 cm³/g) und rührt unter Lichtausschluß bei 40±3°C bis im IR-Spektrum keine _{Si-H}-Schwingung mehr feststellbar ist (48 bis 72 Stunden). Nach Beendigung der Reaktion wird der Katalysator abgefrittet und das Lösungsmittel im Vakuum entfernt.

Ausbeute 43,5 g (94%) eines gelblichen, lichtempfindlichen Öls, Sdp. 202°C (Zers.).
C₂₁H₃₆O₉Si MG: 460,60
Berechnet: C 54,76% H 7,88%
Gefunden: C 56,02% H 7,69%
¹H-NMR (CDCl₃) : δ = 5,6-7,1 (m;-CH=CH₂;6H) 3,2-4,2 (m;-OCH₂-;12H) 2,0-2,5 (t;-CH₂COO-;2H) 0,3-1,8 (m;-CH₃,-CH₂-;16H)
²⁹Si-NMR (CDCl₃): δ = -24,1 (s)

### Herstellungsbeispiel 2

Herstellung der Verbindung der Formel

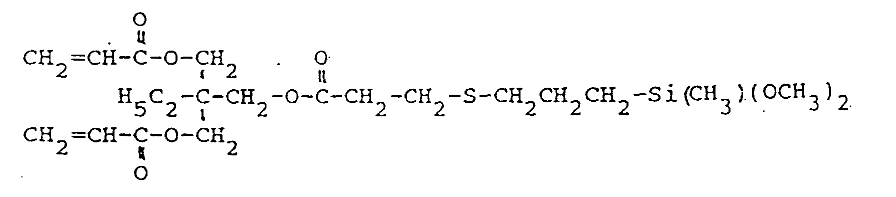

### (Verbindung 2)

0,15 mol (44,45 g) Acrylat J werden unter Kühlung in einem Wasserbad auf 20°C unter Stickstoffschutz vorgelegt und schnell mit 0,15 mol (27,05 g) Silan I sowie 0,0015 mol (0,0842 g) KOH in 6 g Ethanol versetzt. Das Reaktionsgemisch wird 5 Minuten gerührt (Iod-MercaptanTest), dann in 200 ml Diethylether aufgenommen und mit 20 ml H₂O so oft ausgeschüttelt und gewaschen, bis das Waschwasser neutral reagiert. Die Etherphase wird z. B. über Na₂SO₄ oder mit einem hydrophoben Filter getrocknet und im Wasserstrahlvakuum bei 35-40°C eingeengt. Anschließend trocknet man den Rückstand ca. 1 Stunde im Hochvakuum bei 35-40°C.

### Herstellungsbeispiel 3

Herstellung der Verbindung der Formel

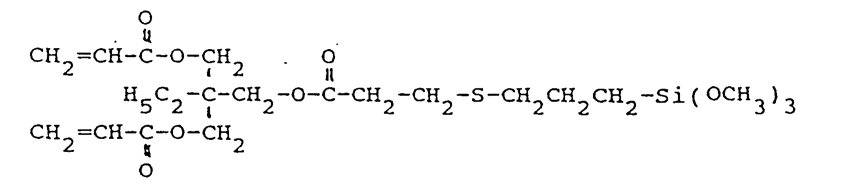

### (Verbindung 3)

Die Herstellung erfolgt wie in Herstellungsbeispiel 2 unter Verwendung einer äquimolaren Menge Silan III anstelle von Silan I.

### Herstellungsbeispiel 4

Herstellung der Verbindung der Formel

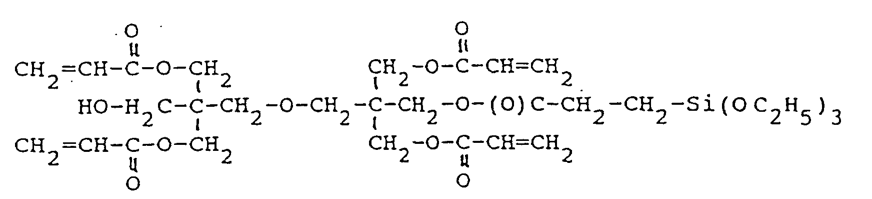

### (Verbindung 4)

Die Herstellung erfolgt wie in Herstellungsbeispiel 1 unter Verwendung einer äquimolaren Menge Acrylat L anstelle von Acrylat J. Man erhält ein gelbliches, lichtempfindliches Öl.
C₃₁H₄₇O₁₅Si MG: 687,80
Berechnet: C 54,14% H 6,89%
Gefunden: C 54,47% H 7,11%

- ¹H-NMR (CDCl₃):: δ = 5,8-6,9 (m;-CH=CH₂;12H) 3,3-4,7 (m;-OCH₂-;22H) 2,2-2,8 (m;-CH₂COO,-OH;3H) 1,2 (t;-OCH₂CH₃;9H) 1,0 (t;-SiCH₂-;2H)
- ²⁹Si-NMR (CDCl₃) :: δ = -26,3 (s)

### Herstellungsbeispiel 5

Herstellung der Verbindung der Formel

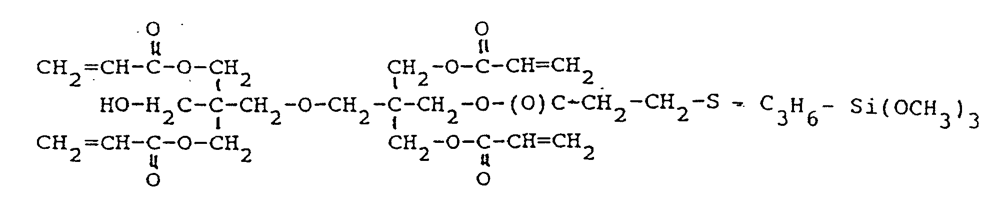

### (Verbindung 5)

Die Herstellung erfolgt wie in Herstellungsbeispiel 3 unter Verwendung einer äquimolaren Menge Acrylat L anstelle von Acrylat J.

### Herstellungsbeispiel 6

### Alternative Herstellung der Verbindung 2 von Herstellungsbeispiel 2

Zu 29,6 g (0,1 Mol) Acrylat J, in 50 ml Ethylacetat gelöst, werden bei 5°C (Eiskühlung) unter Stickstoffatmosphäre 18 g (0,1 Mol) Silan I zugegeben. Wiederum bei 5°C und unter Stickstoffatmosphäre wird die resultierende Mischung langsam (Zutropfen) mit 0,0561 g (0,001 Mol) KOH, gelöst in 5 g Ethanol, versetzt. Dabei wird die Zugabegeschwindigkeit so eingestellt, daß die Temperatur der Reaktionsmischung deutlich unter 40°C bleibt. Nach einigen Minuten Rühren bei 5°C wird der Umsatz überprüft (bei Abwesenheit von freiem Mercaptosilan ist der Iod-Mercaptantest negativ). Nach Beendigung der Umsetzung wird die Reaktionsmischung mit 50 ml Ethylacetat versetzt und solange mit 30 ml-Portionen Wasser gewaschen, bis das Eluat neutral reagiert. Die organische Phase wird dann über Na₂SO₄ getrocknet oder über einen hydrophoben Filter filtriert, anschließend bei 30°C am Rotationsverdampfer eingeengt und schließlich bei 20-30°C im Hochvakuum getrocknet. Ausbeute 44 g = 93% (Feststoffgehalt 99%).

Nach den in den obigen Beispielen beschriebenen Verfahren wurden auch die folgenden erfindungsgemäßen Silane der allgemeinen Formel (I) (1:1-Addukte) erhalten. Die Silane werden dabei durch eine römische Ziffer (Ausgangssilan) und einen Buchstaben (Ausgangsacrylat) gekennzeichnet:
- II-A: (Verbindung 6)
- I-A: (Verbindung 7)
- II-B: (Verbindung 8)
- I-B: (Verbindung 9)
- II-C: (Verbindung 10)
- I-C: (Verbindung 11)
- II-J: (Verbindung 12)
- I-E: (Verbindung 13)
- II-E: (Verbindung 14
- I-F: (Verbindung 15)
- II-F: (Verbindung 16)
- IV-A: (Verbindung 17)
- V-A: (Verbindung 18)
- VI-J: (Verbindung 19)
- IV-J: (Verbindung 20)
- V-L: (2:1 Addukt!) (Verbindung 21)
- VII-J: (Verbindung 22)
- I-M: (Verbindung 23)
- I-H: (Verbindung 24)
- I-D: (Verbindung 25)
- III-K: (Verbindung 26)
- I-I: (Verbindung 27)
- I-L: (Verbindung 28)
- I-G: (Verbindung 29)
- I-N: (Verbindung 30)

### Herstellungsbeispiel 7

Herstellung der Verbindung der Formel

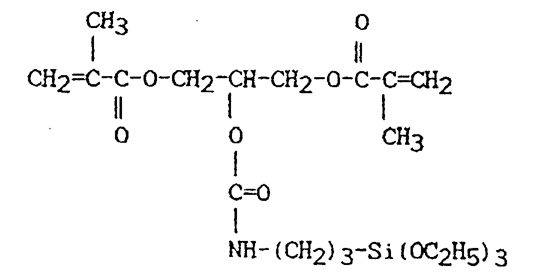

### (Verbindung 31)

Unter feuchtigkeitsfreier Atmosphäre werden zu 11,4 g (0,05 Mol) Acrylat 0 und 1,6 g (0,0025 Mol) Dibutylzinndidodecanoat (oder einer äquivalenten Menge von 1,4-Diazabicyclo[2.2.2]octan) 12,4 g (0,05 Mol) Silan VIII langsam zugetropft. Dabei ist eine Erwärmung der Reaktionsmischung beobachtbar. Die Umsetzung ist nach ca. 1 h beendet (IR-Kontrolle, Abwesenheit freier NCO-Gruppen). Die Isolierung der gewünschten Verbindung kann in bekannter Weise erfolgen. IR (Film): 3380 (breit ν_{N-H}), 1725 (ν_{c=o}) und 1640 (ν_{c=c}) cm⁻¹.

### Beispiel 1

Unter Kühlung auf 5°C (Eisbad) und in einer Stickstoffatmosphäre werden zu einer Lösung von 0,1 Mol (29,6 g) Acrylat J in 50 ml Ethylacetat 0,1 Mol (18 g) Silan I zugegeben, worauf die Mischung so langsam (Zutropfen) mit 0,001 Mol (0,056 g) KOH, gelöst in 5 g Ethanol, versetzt wird, daß die Temperatur der Reaktionsmischung deutlich unter 40°C bleibt. Nach Beendigung der Zugabe wird noch einige Minuten bei 5°C gerührt, bis der Iod-Mercaptantest die Abwesenheit von freiem Silan I anzeigt. Daraufhin werden unter Eiskühlung 0,1 Mol (1,8 g) Wasser in Form einer 1 n HCl-Lösung zugegeben und danach wird noch weitere 2 Stunden bei 25°C gerührt. Anschließend wird die Reaktionsmischung mit Ethylacetat (50 ml) verdünnt und dann solange mit 30 ml-Portionen H₂O gewaschen, bis das Waschwasser neutral reagiert. Die gewaschene organische Phase wird dann über Na₂SO₄ oder mit Hilfe eines hydrophoben Filters getrocknet, worauf nach verschiedenen Varianten aufgearbeitet wird:
(a) Ein praktisch lösungsmittelfreies Polykondensat wird durch Einengen der Lösung am Rotationsverdampfer bei ca. 30°C und anschließende Behandlung im Hochvakuum bei ca. 20 bis 30°C (ca. 1 h) erhalten. Feststoffgehalt 95%; Viskosität 17200 mPa.s (25°C, Rotationsviskosimeter).
(b) Durch Einengen der Ethylacetatlösung am Rotationsverdampfer bei ca. 30°C wird ein beliebiger Feststoffgehalt im Bereich von 30 bis 80% und eine beliebige Viskosität der Polykondensatlösung, je nach beabsichtigtem Verwendungszweck, eingestellt.
(c) Man tauscht das Ethylacetat-Lösungsmittel durch ein anderes Lösungsmittel aus, indem man am Rotationsverdampfer bei ca. 30°C das Ethylacetat soweit wie möglich entfernt und daraufhin ein anderes Lösungsmittel (z.B. Ethanol, Aceton, Toluol, Diethylether, THF etc.) in solchen Mengen zugibt, daß der gewünschte Feststoffgehalt bzw. die gewünschte Viskosität der Lösung erreicht wird.

### Beispiel 2

Man verfährt wie in Beispiel 1, jedoch unter Ersatz von Acrylat J durch eine äquivalente Menge (42,4 g) an Acrylat C. Bei Aufarbeitung gemäß Variante (a) erhält man ein Polykondensat mit einem Feststoffgehalt von 95% und einer Viskosität von 115 000 mPa.s (25°C, Rotationsviskosimeter).

### Beispiel 3

Zu einer Lösung von 50 mMol (26,5 g) Acrylat L in 100 ml Ethanol werden unter Stickstoffatmosphäre 100 mMol (16,4 g) Silan V und 0,15 mMol (0,59 g) Katalysator der Formel (Rh(CO)ClP(C₆H₅)₂CH₂CH₂CH₂SiO_{3/2}·SiO₂) zugegeben. Die Reaktionsmischung wird 7 h bei ca. 30°C gerührt, worauf im IR-Spektrum die Bande bei 2240 cm⁻¹ ( _{Si-H}) verschwunden ist. Anschließend wird der Katalysator abfiltriert und das Filtrat wird langsam (Zutropfen) mit 150 mMol (2,7 g) H₂O in Form einer 1 n HCl-Lösung versetzt. Die Reaktionsmischung wird 3 h bei ca. 25°C gerührt, danach filtriert und bei ca. 30°C am Rotationsverdampfer eingeengt, bis ein Feststoffgehalt von 43% erreicht ist.

### Beispiel 4

Unter Stickstoffatmosphäre werden zu 0,1 Mol (33,8 g) Acrylat N, gelöst in 100 ml Ethylacetat, 0,1 Mol (18,03 g) Silan I zugetropft, gefolgt von der langsamen Zugabe (Zutropfen) einer Lösung von 0,01 Mol (0,56 g) KOH in Ethanol unter Kühlung (Eisbad). Nach etwa 5 Minuten ist die Reaktion (Thiol-Addition) abgeschlossen. Zwecks Hydrolyse und Kondensation werden anschließend 1,8 g 5,7 n HCl zugetropft, worauf 20 h bei Raumtemperatur gerührt wird. Daraufhin wird die Reaktionsmischung zunächst mit verdünnter wässriger NaOH und dann mit destilliertem H₂O gewaschen. Nach Filtration wird am Rotationsverdampfer bei ca. 30°C eingeengt und die verbliebenen flüchtigen Bestandteile werden bei Raumtemperatur im Ölpumpenvakuum entfernt. Zurück bleibt ein farbloses, transparentes Produkt mit einer Viskosität von 1760 mPa.s (25°C, Rotationsviskosimeter).

### Beispiel 5

Es wird wie in Beispiel 4 verfahren, jedoch unter Verwendung von 0,4 Mol (118,5 g) Acrylat J in 400 ml Ethylacetat, 0,4 Mol (72,14 g) Silan I, 0,004 Mol (0,224 g) KOH in Ethanol und 7,2 g 0,7 n HCl. Zurück bleibt ein hellgelbes, transparentes Harz mit einer Viskosität von 9500 bis 13000 mPa.s bei 25°C (abhängig von den genauen Synthesebedingungen).

### Beispiel 6

Analog Beispiel 4 wurden weitere Polykondensate hergestellt und es wurden die Viskositäten der erhaltenen Harze gemessen. Diese sind in der folgenden Tabelle zusammengefaßt:

| **Polykondensat aus Verbindung Nr. (siehe Herstellungs-beispiele)** | **Viskosität bei 25°C (Rotationsviskosimeter) (mPa.s)** |
|---|---|
| 12 | 12300 |
| 22 | 7200 |
| 13 | 4700 - 6600 (abhängig von genauen Synthesebedingungen) |
| 29 | 3200 |

### Anwendungsbeispiel 1

Die in Beispiel 3 erhaltene Polykondensatlösung wird mit 5 Gewichtsprozent, bezogen auf das Polykondensat, eines UV-Initiators (Irgacure^{(R)} 907) versetzt und dann mit einem Filmziehschlitten auf eine Platte aus Polymethylmethacrylat aufgetragen. Durch UV-Bestrahlung (Strahlerleistung 2000 W) wird daraufhin eine Härtung des resultierenden Überzugs bewirkt. Die Aushärtungszeiten, die Schichtdicken der gehärteten Überzüge und der Abrieb nach 100 Zyklen mit dem Taber-Abraser sind in der folgenden Tabelle 1 angegeben.

**TABELLE 1**

| Bestrahlungszeit (s) | Schichtdicke (um) | Abrieb nach 100 Zyklen (%) |
|---|---|---|
| 0,1 | 13 | 6,7 |
| 0,5 | 17 | 4,5 |
| 5 | 18 | 3,0 |

Wie aus den obigen Ergebnissen ersichtlich, können die erfindungsgemäßen Polykondensate durch Bestrahlung in Sekundenbruchteilen zu Schutzüberzügen mit beträchtlicher Abriebfestigkeit gehärtet werden. Selbstverständlich können durch längere Bestrahlungszeiten und/oder andere geeignete Maßnahmen (Erhöhung der Initiatormenge oder der Strahlerleistung) sogar noch bessere Überzüge erhalten werden.

### Anwendungsbeispiel 2

Das praktisch lösungsmittelfreie Polykondensat von Beispiel 2 wird nach der Zugabe eines UV-Initiators mit einem Spaltrakel auf eine Glasplatte aufgetragen und durch UV-Bestrahlung (Strahlerleistung 2000 W) gehärtet. In der folgenden Tabelle 2 sind Art und Menge des UV-Initiators, die Bestrahlungszeiten, die resultierenden Schichtdicken und die Abriebwerte nach 100 Zyklen (Taber-Abraser) zusammengefaßt.

**TABELLE 2**

| UV-Initiator | Initiator-Menge (Gew.-%) | Bestrahllungszeit (s) | Schichtdicke (µm) | Abrieb nach 100 Zyklen (%) |
|---|---|---|---|---|
| Irgacure^{(R)} 907 | 5 | 0,5 | 20 | 5 |
| Irgacure^{(R)} 369 | 3 | 0,5 | 30 | 7 |
| Irgacure^{(R)} 369 | 3 | 0,1 | 30 | 10 |

E-Modul der Überzüge: ca. 70 MPa

Neben den oben angegebenen zufriedenstellenden Abriebwerten bei extrem kurzen Bestrahlungszeiten ist das eingesetzte Polykondensat insbesondere auch dadurch gekennzeichnet, daß es hochelastisch ist und einen "self-healing"-Effekt zeigt (d.h. Risse fließen wieder zu).

### Anwendungsbeispiel 3

Es wird analog Anwendungsbeispiel 2 verfahren, jedoch das praktisch lösungsmittelfreie Polykondensat von Beispiel 1 eingesetzt. Die erhaltenen Meßergebnisse sind in der folgenden Tabelle 3 zusammengefaßt.

**TABELLE 3**

| UV-Initiator | Initiator-Menge (Gew.-%) | Bestrahlungszeit (s) | Schichtdicke (µm) | Abrieb nach 100 Zyklen (%) |
|---|---|---|---|---|
| Irgacure^{(R)} 907 | 5 | 0,5 | 20 | 10 |
| Irgacure^{(R)} 367 | 1 | 60 | 20 | 4,5 |

E-Modul der Überzüge: ca. 2150 MPa Zum Vergleich soll angemerkt werden, daß der Abrieb nach 100 Zyklen mit dem Taber-Abraser für Polycarbonat und PVC zu 28 bzw. 37% bestimmt wurde.

### Anwendungsbeispiel 4

Es wurden weitere Verbindungen nach dem in den obigen Beispielen beschriebenen Verfahren zu erfindungsgemäßen Polykondensaten verarbeitet. In der folgenden Tabelle 4 sind die Brechzahlen (n_{D}) und Abbe-Zahlen (ν_{D}) einiger der erhaltenen Polykondensate zusammengefaßt.

**TABELLE 4**

| Polykondensat aus Verbindung Nr. (siehe Herstellungs-beispiele) | n_{D} | ν_{D} |
|---|---|---|
| 2 | 1,49 | 42-47 |
| 23 | 1,549 | 35-36 |
| 24 (1,25:1-Addukt) | 1,587 | 32 |
| 11 | 1,547 | 38,5 |
| 29 | 1,533 | 38 |

### Anwendungsbeispiel 5

Ein gemäß den in den obigen Beispielen beschriebenen Verfahren hergestelltes Polykondensat in praktisch lösungsmittelfreier Form wird mit 0,5 Gewichtsprozent Irgacure^{(R)} 184 (UV-Initiator) versetzt, in eine Härtungsform (Durchmesser 4 cm) gegeben und mit einer Leistung von 500 bzw. 1000 W (Quecksilbermitteldruckstrahler Loctite Uvaloc^{(R)} 1000) jeweils ca. 1 Minute lang von vorne und hinten bestrahlt. Es wird ein gehärteter, transparenter Formkörper (d = 5 mm) erhalten. Ähnliche Ergebnisse erhält man bei der ca. einstündigen thermischen Härtung bei 60 bis 70°C nach Zusatz von 0,5 bis 1,0 Gewichtsprozent t-Butylperneodecanoat.

In der folgenden Tabelle 5 sind die Brechzahlen (n_{D}) und die Abbe-Zahlen ( _{D}) einiger der so hergestellten (UV-Härtung)Formkörper angegeben.

**TABELLE 5**

| Formkörper aus Polykondensat von Verbindung Nr. | n_{D} | ν_{D} |
|---|---|---|
| 2 | 1,52 | 47-52 |
| 23 | 1,556 | 35 |
| 24 (1,25:1-Addukt) | 1,599 | 33 |

### Anwendungsbeispiel 6

Aus einigen der wie in den obigen Beispielen beschrieben hergestellten Polykondensate wurden nach Zugabe von

1 Gewichtsprozent Irgacure^{(R)} 184 als UV-Initiator UV-gehärtete quaderförmige Stäbchen hergestellt. An dieser Stäbchen wurde im 3-Punkt-Biegeversuch (Universalprüfmaschine UTS-100) das E-Modul bestimmt. In der folgenden Tabelle 6 sind die erhaltenen Werte zusammengefaßt. Es wird gelegentlich ein Wertebereich angegeben. Der exakte Wert hängt dann von den genauen Härtungsbedingungen ab.

**TABELLE 6**

| Stäbchen aus Polykondensat von Verbindung Nr. | E-Modul (MPa) |
|---|---|
| 25 | 1400-1700 |
| 13 | 65-75 |
| 2 | 1200-1300 |
| 22 | 1100-1200 |
| 30 | 480 |
| 12 | 2030 |

## Patentansprüche

1. Mit ungesättigten organischen Gruppen modifizierte Polykondensate auf der Basis von hydrolytisch kondensierbaren Verbindungen des Siliciums und gegebenenfalls anderer Elemente aus der Gruppe B, Al, P, Sn, Pb, der Übergangsmetalle, der Lanthaniden und der Aktiniden, in denen 5 bis 100 Molprozent, auf Basis monomerer Verbindungen, der zugrundeliegenden hydrolytisch kondensierbaren Verbindungen aus Silanen der allgemeinen Formel (I) ausgewählt sind:
{XₐR_{b}Si[R'(A)_{c}]_{(4-a-b)}}ₓB (I)
in der die Reste und Indices folgende Bedeutung haben:
X: Wasserstoff, Halogen, Hydroxy, Alkoxy, Aryloxy, Acyloxy, Alkylcarbonyl, Alkoxycarbonyl oder NR"₂;
R: Alkyl, Alkenyl, Alkinyl, Aryl, Alkylaryl oder Arylalkyl;
R': Alkylen, Arylen oder Alkylenarylen;
R": Wasserstoff, Alkyl oder Aryl;
A: O, S, PR", POR", NHC(O)O oder NHC(O)NR";
B: geradkettiger oder verzweigter organischer Rest mit mindestens einer C=C-Doppelbindung, der sich von einer Verbindung B' mit mindestens einer (für c = 1 und A = NHC(O)O oder NHC(O)NR") bzw. mindestens zwei C=C-Doppelbindungen und 5 bis 50 Kohlenstoffatomen ableitet;
a: 1,2 oder 3;
b: 0, 1 oder 2;
c: 0 oder 1;
x: ganze Zahl, deren Maximalwert der Anzahl von Doppelbindungen in der Verbindung B' minus 1 entspricht, bzw. gleich der Anzahl von Doppelbindungen in der Verbindung B' ist, wenn
c = 1 und A für NHC(O)O oder NHC(O)NR" steht;
mit der Maßgabe, daß die eingesetzten hydrolytisch kondensierbaren Siliciumverbindungen keine Verbindungen der Formel (I') 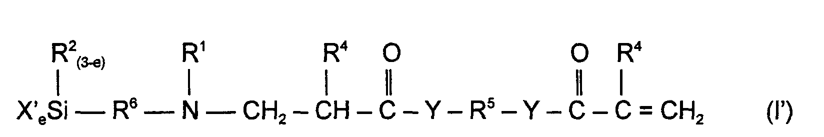 worin R⁶ einen zweiwertigen Kohlenwasserstoffrest oder einen zweiwertigen Kohlenwasserstoffrest mit Amin-Funktionalität =NH, wobei die beiden freien Valenzen von =NH an Kohlenstoffatome gebunden sind und das Wasserstoffatom gegebenenfalls durch eine Gruppe der Formel (II') 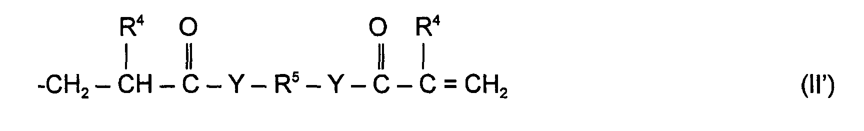 ersetzt ist, darstellt;
R¹ Wasserstoff, einen Alkylrest mit 1 bis 4 Kohlenstoffatomen oder eine Gruppe der obigen Formel (II') repräsentiert;
R² ein einwertiger Kohlenwasserstoffrest oder fluorierter Alkylrest ist;
X' eine hydrolysierbare Gruppe bedeutet, deren hydrolysierte Gruppen mit dem Stickstoffatom keine Salze bilden;
R⁴ für H oder CH₃ steht;
R⁵ zweiwertige Kohlenwasserstoffreste, die gegebenenfalls Etherbindungen enthalten, darstellt;
Y für -O- oder -NR¹- steht; und
e 1, 2 oder 3 ist,
der Formel (I") 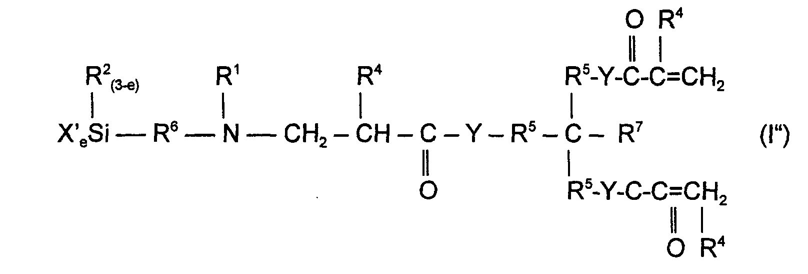 worin die Substituenten R¹, R², R⁴, R⁵, R⁶, X', Y und e wie oben definiert sind und R⁷ ein einwertiger Rest ist, der aus einem Kohlenwasserstoffrest, einem Hydroxy-substituierten aliphatischen Kohlenwasserstoffrest und einem Acrylrest der Formel 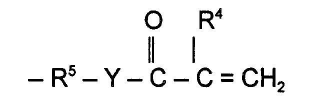 ausgewählt ist; der Formel (I''') 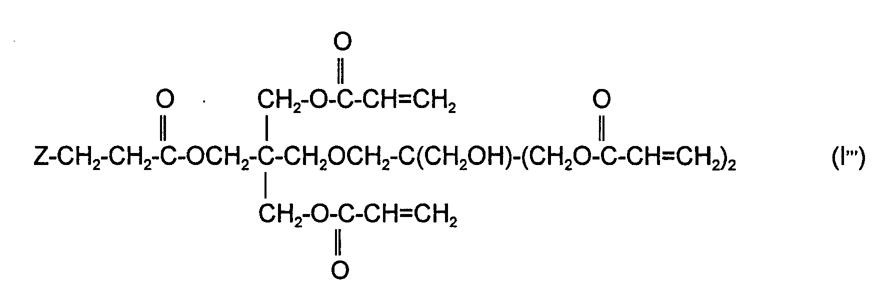 worin Z der Rest 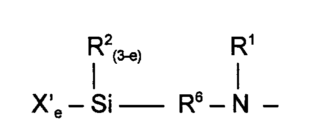 ist, die Substituenten R¹, R², R⁶, X' und e wie oben definiert sind; oder der Formel (I''''). 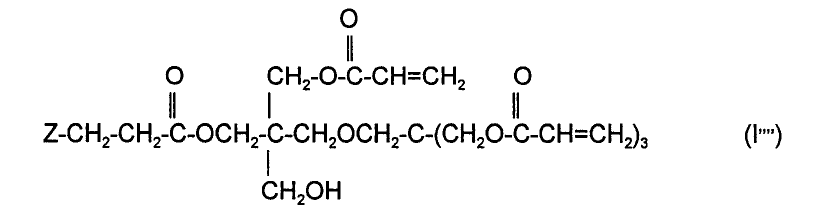 worin der Substituent Z wie oben definiert ist, sind.

2. Polykondensate nach Anspruch 1, in denen in der allgemeinen Formel (I) die Reste und Indices die folgende Bedeutung haben:
X : (C₁-C₄)-Alkoxy, insbesondere Methoxy und Ethoxy; oder Halogen, insbesondere Chlor;
R: (C₁-C₄)-Alkyl, insbesondere Methyl und Ethyl;
R' : (C₁-C₄)-Alkylen, insbesondere Methylen und Propylen;
A: O oder S, insbesondere S;
a: 1, 2 oder 3;
(4-a-b): 0 für c = 0 und 1 für c = 1;
c: 0 oder 1, vorzugsweise 1;
B und x: wie in Anspruch 1 definiert.

3. Polykondensate nach irgendeinem der Ansprüche 1 und 2, in denen in der allgemeinen Formel (I) die Einheit mit dem Index x ausgewählt ist aus Triethoxysilyl, Methyldiethoxysilyl, Methyldichlorsilyl, 3-Methyldimethoxysilyl-propylthio, 3-Triethoxysilylpropylthio, Ethoxydimethylsilyl-methylthio und Methyldiethoxysilyl-methylthio.

4. Polykondensate nach irgendeinem der Ansprüche 1 bis 3, in denen die Verbindung B' eine (für c = 1 und A = NHC(O)O oder NHC(O)NR") bzw. zwei C=C-Doppelbindungen enthält.

5. Polykondensate nach irgendeinem der Ansprüche 1 bis 4, in denen sich B von einer substituierten oder unsubstituierten Verbindung B' mit zwei oder mehreren Acrylat- und/oder Methacrylatgruppen ableitet.

6. Polykondensate nach Anspruch 5, in denen sich B von Acrylsäureestern von Trimethylolpropan, Pentaerythrit, Dipentaerythrit, C₂-C₆-Alkandiolen, Polyethylenglykolen, Polypropylenglykolen oder gegebenenfalls substituiertem und/oder alkoxyliertem Bisphenol A ableitet.

7. Polykondensate nach irgendeinem der Ansprüche 1 bis 6, in denen mindestens 50 Molprozent und insbesondere mindestens 80 Molprozent der zugrundeliegenden monomeren Verbindungen Siliciumverbindungen sind.

8. Polykondensate nach irgendeinem der Ansprüche 1 bis 7, in denen 25 bis 100 Molprozent, und insbesondere 50 bis 100 Molprozent der zugrundeliegenden monomeren Verbindungen Silane der allgemeinen Formel (I) sind.

9. Polykondensate nach irgendeinem der Ansprüche 1 bis 8, in denen die gegebenenfalls zugrundeliegenden, von Siliciumverbindungen verschiedenen Verbindungen aus Verbindungen von Al, Ti, Zr, V, B, Sn und Pb und Kombinationen davon ausgewählt sind.

10. Polykondensate nach irgendeinem der Ansprüche 1 bis 9, in denen die gegebenenfalls zugrundeliegenden, von Silanen der allgemeinen Formel (I) verschiedenen Siliciumverbindungen aus Silanen der allgemeinen Formel (V) ausgewählt sind:
X_{a'}SiR_{b'} (V)
in der X und R wie in Anspruch 1 oder 2 definiert sind, a' ein ganze Zahl von 1 bis 4, vorzugsweise 2 bis 4, ist und b' für 0, 1, 2 oder 3, vorzugsweise 0, 1 oder 2, steht. Elemente aus der Gruppe B, Al, P, Sn, Pb, der Übergangsmetalle, der Lanthaniden und der Aktiniden und/oder von den oben genannten Verbindungen abgeleitete Vorkondensate gegebenenfalls in Anwesenheit eines Katalysators und/oder eines Lösungsmittels durch Einwirkung von Wasser oder Feuchtigkeit hydrolytisch kondensiert, wobei 5 bis 100 Molprozent, auf der Basis monomerer Verbindungen, der hydrolytisch kondensierbaren Verbindungen aus Silanen der allgemeinen Formel (I) ausgewählt werden:
{XₐR_{b}Si[R'(A)_{c}]_{(4-a-b)}}ₓB (I)
in der die Reste und Indices folgende Bedeutung haben:
X: Wasserstoff, Halogen, Hydroxy, Alkoxy, Acyloxy, Alkylcarbonyl, Alkoxycarbonyl oder -NR"₂;
R: Alkyl, Alkenyl, Aryl, Alkylaryl oder Arylalkyl;
R' : Alkylen, Arylen oder Alkylenarylen;
R": Wasserstoff, Alkyl oder Aryl;
A: O, S, PR", POR", NHC(O)O oder NHC(O)NR";
B: geradkettiger oder verzweigter organischer Rest, der sich von einer Verbindung B' mit mindestens einer (für c = 1 und A = NHC(O)O oder NHC(O)NR") bzw. mindestens zwei C=C-Doppelbindungen und 5 bis 50 Kohlenstoffatomen ableitet;
a: 1, 2 oder 3;
b: 0, 1 oder 2;
c: 0 oder 1;
x: ganze Zahl, deren Maximalwert der Anzahl von Doppelbindungen in der Verbindung B' minus 1 entspricht, bzw. gleich der Anzahl von Doppelbindungen in der Verbindung B' ist, wenn c = 1 und A für NHC(O)O oder NHC(O)NR" steht.

11. Verfahren zur Herstellung von mit organischen Gruppen modifizierten Sihaltigen Polykondensaten, bei welchem man eine oder mehrere hydrolytisch kondensierbare Verbindungen des Siliciums und gegebenenfalls anderer Elemente aus der Gruppe B, Al, P, Sn, Pb, der Übergangsmetalle, der Lanthaniden und der Aktiniden und/oder von den oben genannten Verbindungen abgeleitete Vorkondensate gegebenenfalls in Anwesenheit eines Katalysators und/oder eines Lösungsmittels durch Einwirkung von Wasser oder Feuchtigkeit hydrolytisch kondensiert, wobei 5 bis 100 Molprozent, auf der Basis monomerer Verbindungen, der hydrolytisch kondensierbaren Verbindungen aus Silanen der allgemeinen Formel (I) ausgewählt werden:
{XₐR_{b}Si[R'(A)_{c}]_{(4-a-b)}}ₓB (I)
in der die Reste und Indices folgende Bedeutung haben:
X: Wasserstoff, Halogen, Hydroxy, Alkoxy, Aryloxy, Acyloxy, Alkylcarbonyl, Alkoxycarbonyl oder NR"₂;
R: Alkyl, Alkenyl, Alkinyl, Aryl, Alkylaryl oder Arylalkyl;
R': Alkylen, Arylen oder Alkylenarylen;
R": Wasserstoff, Alkyl oder Aryl;
A: O, S, PR", POR", NHC(O)O oder NHC(O)NR";
B: geradkettiger oder verzweigter organischer Rest mit mindestens einer C=C-Doppelbindung, der sich von einer Verbindung B' mit mindestens einer (für c = 1 und A = NHC(O)O oder NHC(O)NR") bzw. mindestens zwei C=C-Doppelbindungen und 5 bis 50 Kohlenstoffatomen ableitet;
a: 1, 2 oder 3;
b: 0, 1 oder 2; 2;
c: 0 oder 1;
x: ganze Zahl, deren Maximalwert der Anzahl von Doppelbindungen in der Verbindung B' minus 1 entspricht, bzw. gleich der Anzahl von Doppelbindungen in der Verbindung B' ist, wenn
c = 1 und A für NHC(O)O oder NHC(O)NR" steht.

12. Verfahren zur Herstellung eines Beschichtungslacks oder einer Formmasse, bei dem man ein Polykondensat gemäß irgendeinem der Ansprüche 1 bis 10 oder ein nach dem Verfahren von Anspruch 11 erhältliches Polykondensat mit einem oder mehreren Katalysatoren für die thermische und/oder photochemische Härtung sowie gegebenenfalls einem Lösungsmittel und/oder Verdünnungsmittel, das gegebenenfalls thermisch und/oder photochemisch polymerisierbare Gruppen enthält, kombiniert.

13. Verfahren nach Anspruch 12, bei dem das Lösungs- und/oder Verdünnungsmittel mit thermisch und/oder photochemisch polymerisierbaren Gruppen ausgewählt ist aus Verbindungen B', (Meth)acrylsäure, (Meth)acrylsäureestern von einwertigen Alkoholen, (Meth)acrylnitril, Styrol, N-Vinylpyrrolidon und Mischungen derselben.

14. Verfahren nach irgendeinem der Ansprüche 11 bis 13, bei dem dem Polykondensat zusätzlich übliche Lackadditive (bei Herstellung eines Beschichtungslacks) oder anorganische und/oder organische Füllstoffe sowie gegebenenfalls Verarbeitungshilfsmittel (bei Herstellung einer Formmasse) zugesetzt werden.

15. Beschichtungslack oder Formmasse, erhältlich nach dem Verfahren gemäß irgendeines der Ansprüche 12 bis 14.

## Claims

1. Polycondensates modified with unsaturated organic groups on the basis of hydrolytically condensable compounds of silicon and possibly other elements from the group B, Al, P, Sn, Pb, of transition metals, lanthanides and actinides, in which 5 to 100 mole percent, on the basis of monomer compounds, of the underlying hydrolytically condensable compounds are selected from silanes of the general formula (1) :
{XₐR_{b}Si[R'(A)_{c}]_{(4-a-b)}}ₓB (I)
wherein the residues and indices have the following meaning:
X: hydrogen, halogen, hydroxy, alkoxy, aryloxy, acyloxy, alkylcarbonyl, alkoxycarbonyl or NR"₂;
R: alkyl, alkenyl, alkinyl, aryl, alkylaryl or arylalkyl;
R' : alkylene, arylene or alkylene arylene;
R" : hydrogen, alkyl or aryl;
A: O, S, PR", POR", NHC(O)O or NHC(O)NR";
B: straight-chain or branched organic residue having at least one C=C double bond which is derived from a B' compound with at least one (for c = 1 and A = NHC(O)O or NHC(O)NR") or at least two C=C double bonds and 5 to 50 carbon atoms;
a : 1, 2 or 3;
b: 0, 1 or 2;
c: 0 or 1;
x : a whole number, the maximum value of which corresponds to the number of double bonds in the B' compound minus 1, or is equal to the number of double bonds in the B' compound, if c = 1 and A stands for NHC(O)O or NHC(O)NR";
with the proviso that the hydrolytically condensable silicon compounds used are not compounds of the formula (1') 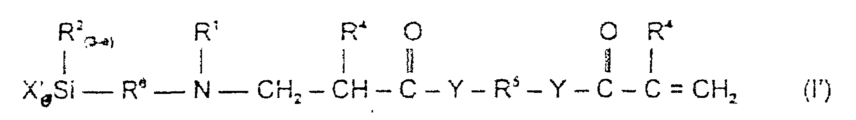 wherein R⁶ represents a bivalent hydrocarbon residue or a bivalent hydrocarbon residue with amine functionality =NH, the two free valences of =NH being bonded to carbon atoms and the hydrogen atom possibly being replaced by a group of the formula (II') 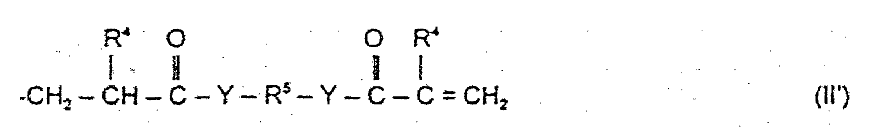
R¹ represents hydrogen, an alkyl residue having 1 to 4 carbon atoms or a group of the above formula (II');
R² is a monovalent hydrocarbon residue or fluorinated alkyl residue;
X' means a hydrolysable group, the hydrolysed groups of which do not form any salts with the nitrogen atom;
R⁴ stands for H or CH₃;
R⁵ represents bivalent hydrocarbon residues which possibly contain ether bonds;
Y stands for -O- or -NR¹; and
e is 1, 2 or 3,
of the formula (I") 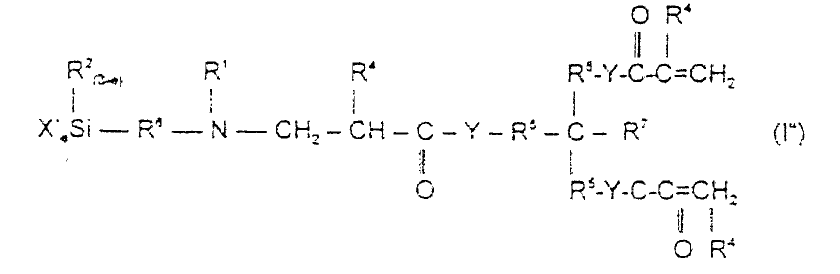 wherein the substituents R¹, R², R⁴, R⁶, X', Y and e are as defined above and R⁷ is a monovalent residue which is selected from a hydrocarbon residue, a hydroxy-substituted aliphatic hydrocarbon residue and an acrylic residue of the formula 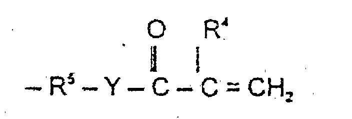 of the formula (I"') 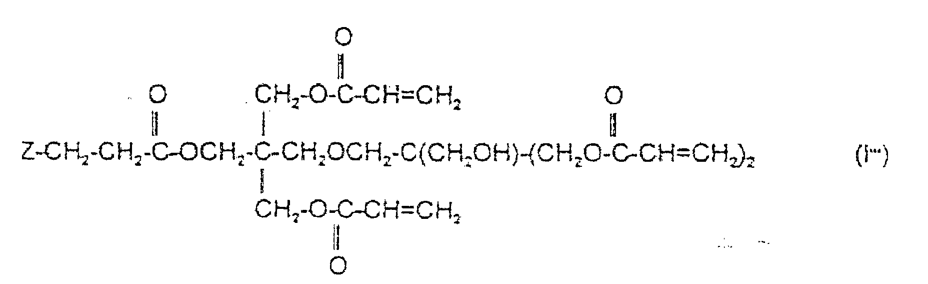 wherein Z is the residue 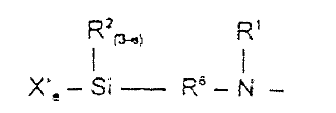 the substituents R¹, R², R⁶, X' and e are as defined above; or of the formula (I"") 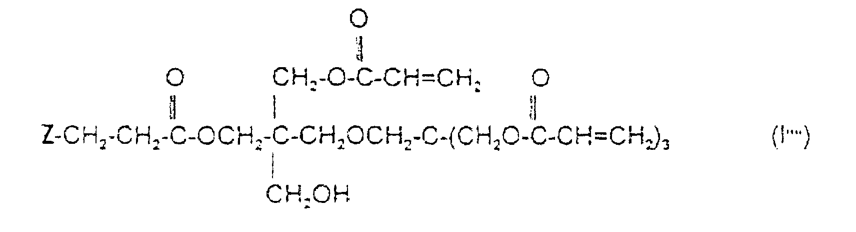 wherein the substituent Z is as defined above.

2. Polycondensates according to claim 1 in which in the general formula (I) the residues and indices have the following meaning:
X: (C₁-C₄)-alkoxy, especially methoxy and ethoxy; or halogen, especially chlorine;
R: (C₁-C₄)-alkyl, especially methyl and ethyl;
R' : (C₁-C₄)-alkylene, especially methylene and propylene;
A: O or S, especially S;
a: 1, 2 or 3;
(4-a-b) : 0 for c = 0 and 1 for c = 1;
C : 0 or 1, preferably 1;
B and x: as defined in claim 1.

3. Polycondensates according to any one of claims 1 and 2, in which in the general formula (I) the unit with the index x is selected from triethoxysilyl, methyldiethoxysilyl, methyldichlorosilyl,3-methyldimethoxysilylpropylthio, 3-triethoxysilyl-propylthio, ethoxydimethylsilyl-methylthio and methyldiethoxysilyl-methylthio.

4. Polycondensates according to any one of claims 1 to 3, in which the B' compound contains one (for c = 1 and A = NHC(O)O or NHC(O)NR") or two C=C double bonds.

5. Polycondensates according to any one of claims 1 to 4, in which B is derived from a substituted or non-substituted B' compound with two or more acrylate and/or methacrylate groups.

6. Polycondensates according to claim 5, in which B is derived from acrylic-acid esters of trimethylolpropane, pentaerythrite, dipentaerythrite, C₂-C₆-alkane diols, polyethylene glycols, polypropylene glycols or possibly substituted and/or alkoxylated bisphenol A.

7. Polycondensates according to any one of claims 1 to 6, in which at least 50 mole percent and especially at least 80 mole percent of the underlying monomer compounds are silicon compounds.

8. Polycondensates according to any one of claims 1 to 7, in which 25 to 100 mole percent, and especially 50 to 100 mole percent of the underlying monomer compounds are silanes of the general formula (I).

9. Polycondensates according to any one of claims 1 to 8 in which the possibly underlying compounds different from silicon compounds are selected from compounds of Al, Ti, Zr, V, B, Sn and Pb and combinations of same.

10. Polycondensates according to any one of claims 1 to 9, in which the possibly underlying silicon compounds different from silanes of the general formula (I) are selected from silanes of the general formula (V):
Xₐ,SiR_{b}, (V)
in which X and R are as defined in claim 1 or 2, a' is a whole number from 1 to 4, preferably 2 to 4, and b' stands for 0, 1, 2 or 3, preferably 0, 1 or 2.

11. Method of manufacturing polycondensates which contain Si and are modified with organic groups, in which method one or more hydrolytically condensable compounds of silicon and possibly other elements from the group B, Al, P, Sn, Pb, of transition metals, lanthanides and actinides and/or precondensates derived from the above-mentioned compounds are hydrolytically condensed possibly in the presence of a catalyst and/or a solvent through the action of water or moisture, 5 to 100 mole percent, on the basis of monomer compounds, of the hydrolytically condensable compounds being selected from silanes of the general formula (1) :
{XₐR_{b}Si[R'(A)_{c}]_{(4-a-b)}}ₓB (I)
wherein the residues and indices have the following meaning:
X: hydrogen, halogen, hydroxy, alkoxy, aryloxy, acyloxy, alkylcarbonyl, alkoxycarbonyl or NR"₂;
R: alkyl, alkenyl, alkinyl, aryl, alkylaryl or arylalkyl;
R' : alkylene, arylene or alkylene arylene;
R" : hydrogen, alkyl or aryl;
A: O, S, PR", POR", NHC(O)O or NHC(O)NR";
B: straight-chain or branched organic residue having at least one C=C double bond which is derived from a B' compound with at least one (for c = 1 and A = NHC(O)O or NHC(O)NR") or at least two C=C double bonds and 5 to 50 carbon atoms;
a: 1, 2 or 3;
b: 0, 1 or 2;
c: 0 or 1;
x: a whole number, the maximum value of which corresponds to the number of double bonds in the B' compound minus 1, or is equal to the number of double bonds in the B' compound, if c = 1and A stands for NHC(O)O or NHC(O)NR".

12. Method of manufacturing a coating lacquer or a moulding compound, in which a polycondensate according to any one of claims 1 to 10 or a polycondensate obtainable according to the method of claim 11 is combined with one or more catalysts for thermal and/or photochemical hardening and possibly a solvent and/or a thinning agent, which possibly contains thermally and/or photochemically polymerisable groups.

13. Method according to claim 12, in which the solvent and/or thinning agent with thermally and/or photochemically polymerisable groups is selected from B' compounds, (meth)acrylic acid, (meth)acrylic-acid esters of monovalent alcohols, (meth)acrylonitrile, styrene, N-vinylpyrrolidone and mixtures of same.

14. Method according to any one of claims 11 to 13, in which there are also added to the polycondensate standard lacquer additives (in manufacturing a coating lacquer) or inorganic and/or organic fillers and possibly processing agents (in manufacturing a moulding compound).

15. Coating lacquer or moulding compound, obtainable according to the method according to any one of claims 12 to 14.

## Revendications

1. Polycondensats, modifiés par des groupes organiques insaturés, à base de composés, condensables par hydrolyse, de silicium et le cas échéant d'autres éléments du groupe B, Al, P, Sn, Pb, des métaux de transition, des lanthanides et des actinides, dans lesquels de 5 à 100 % molaire, sur la base des composés monomères, des composés condensables par hydrolyse qui en sont à la base, sont choisis parmi les silanes de formule générale (I) :
{XₐR_{b}Si[R'(A)_{c}] _{(4-a-b)}}ₓB (I)
dans laquelle les indices ont la signification suivante :
X : hydrogène, halogène, hydroxy, alcoxy, aryloxy, acyloxy, alkylcarbonyle, alcoxycarbonyle ou -NR"₂ ;
R : alkyle, alcényle, alcynyle, aryle, alkylaryle ou arylalkyle;
R' : alkylène, arylène ou alkylènearylène ;
R" : hydrogène, alkyle ou aryle ;
A : O, S, PR", POR", NHC(O)O ou NHC(O)NR" ;
B : radical organique à chaîne droite ou ramifiée, qui dérive d'un composé B' avec au moins une (pour c = 1 et A = NHC(O)O ou NHC(O)NR") ou selon les cas au moins deux doubles liaisons C=C et de 5 à 50 atomes de carbone ;
a : 1, 2 ou 3 ;
b : 0, 1 ou 2 ;
c : 0 ou 1 ;
x : nombre entier, dont la valeur maximale correspond au nombre de doubles liaisons dans le composé B' moins 1, ou selon les cas est égal au nombre de doubles liaisons dans le composé B' lorsque c = 1 et A représente NHC(O)O ou NHC(O)NR" ;
sous réserve que les composés de silicium condensables par hydrolyse utilisés ne sont pas des composés de formules (I') 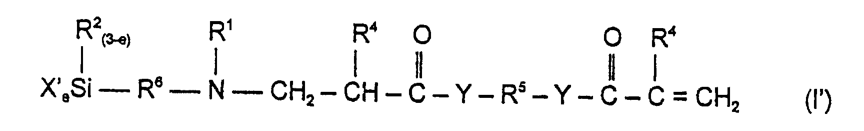 dans laquelle
R⁶ représente un radical hydrocarboné bivalent ou un radical hydrocarboné bivalent à fonctionnalité amine =NH, les deux valences libres de =NH étant liées sur des atomes de carbone et l'atome d'hydrogène étant le cas échéant remplacé par un groupe de formule (II') 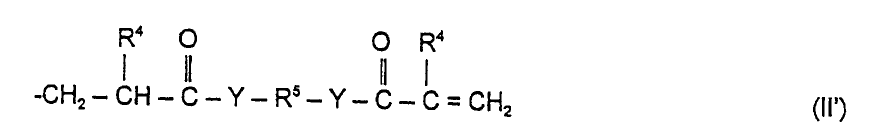
R¹ représente un hydrogène, un radical alkyle ayant de 1 à 4 atomes de carbone ou un groupe de formule (II') ci-dessus ;
R² représente un radical hydrocarboné monovalent ou un radical alkyle fluoré ;
X' représente un groupe hydrolysable, dont les groupes hydrolysés ne forment pas de sel avec l'atome d'azote ;
R⁴ représente H ou CH₃ ;
R⁵ représente des radicaux hydrocarbonés bivalents qui contiennent le cas échéant des liaisons éther ;
Y représente -O- ou -NR¹- ; et
e vaut 1, 2 ou 3,
de formule (I") 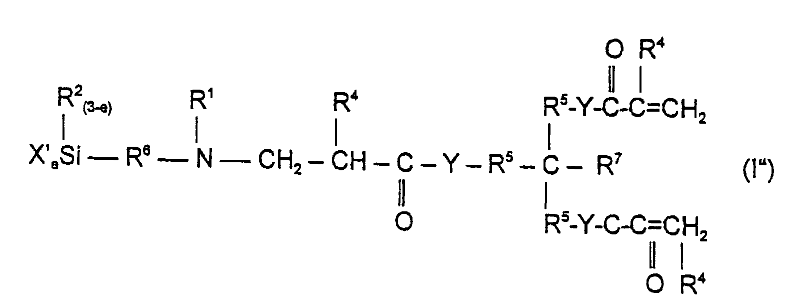 dans laquelle les substituants R¹, R², R⁴, R⁵, R⁶, X', Y et e sont tels que définis ci-dessus et R⁷ est un radical monovalent, qui est choisi parmi un radical hydrocarboné, un radical hydrocarboné aliphatique à substitution hydroxy et un radical acyle de formule 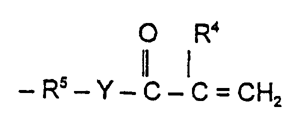 de formule (I"') 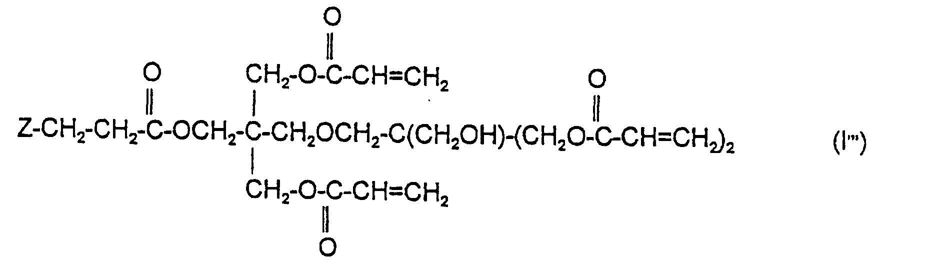 dans laquelle Z est le radical 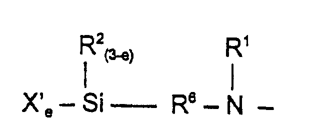 les substituants R¹, R², R⁶, X¹ et e sont tels que définis ci-dessus ; ou de formule (I"") 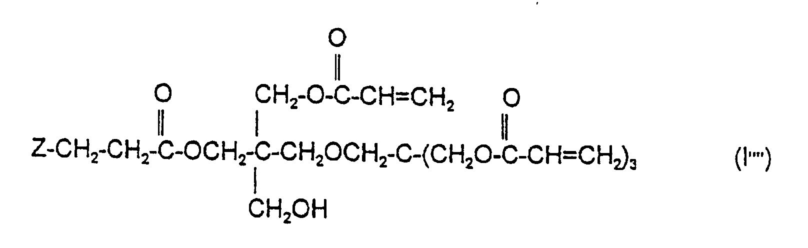 où le substituant Z est défini comme défini ci-dessus.

2. Polycondensats selon la revendication 1, dans lesquels dans la formule générale (I) les radicaux et indices ont la signification suivante :
X représente un alcoxy en C₁ à C₄, en particulier un méthoxy et un éthoxy ; ou un halogène, en particulier le chlore ;
R représente un alkyle en C₁ à C₄ ; en particulier le méthyle et l'éthyle ;
R' représente un alkylène en C₁ à C₄, en particulier le méthylène et le propylène ;
A représente O ou S, en particulier S ; a vaut 1, 2 ou 3 ;
(4-a-b) représente 0 pour c = 0 et 1 pour c = 1 ;
c vaut 0 ou 1, de préférence 1 ;
B et X sont tels que définis dans la revendication 1.

3. Polycondensats selon l'une quelconque des revendications 1 et 2,
dans lesquels
dans la formule générale (I) l'unité ayant l'indice x est choisi parmi triéthoxysilyle, méthyldiéthoxysilyle, 3-méthyldiméthoxysilyl-propylthio, 3-triéthoxysilylpropylthio, éthoxydiméthylsilyl-méthylthio et méthyldiéthoxysilyl-méthylthio.

4. Polycondensats selon l'une quelconque des revendications 1 à 3,
dans lesquels
le composé B' contient une (pour c = 1 et A = NH(O)O ou NHC(O)NR") ou selon les cas deux doubles liaisons C=C.

5. Polycondensats selon l'une quelconque des revendications 1 à 4,
dans lesquels
B dérive d'un composé B' substitué ou non substitué ayant deux ou plusieurs groupes acrylates et/ou méthacrylates.

6. Polycondensats selon la revendication 5,
dans lesquels
B dérivent d'esters d'acides acryliques de triméthylol propane, de pentaérythritol, de dipentaérythritol, d'alcanes diols en C₂ à C₆, de polyéthylène-glycols, de polypropylène-glycols ou de bisphénol A éventuellement substitué et/ou alcoxylé.

7. Polycondensats selon l'une quelconque des revendications 1 à 6,
dans lesquels
au moins 50 % molaire et en particulier au moins 80 % molaire des composés monomères qui sont à la base sont des composés de silicium.

8. Polycondensats selon l'une quelconque des revendications 1 à 7,
dans lesquels
de 25 à 100 % molaire, et en particulier de 50 à 100 % molaire des composés monomères qui sont à la base sont des silanes de formule générale (I).

9. Polycondensats selon l'une quelconque des revendications 1 à 8,
dans lesquels
les composés qui sont à la base, différents des composés de silicium sont choisis parmi les composés d'Al, Ti, Zr, V, B, Sn et Pb et leurs combinaisons.

10. Polycondensats selon l'une quelconque des revendications 1 à 9,
dans lesquels
les composés de silicium qui sont le cas échéant à la base, différents de silanes de formule générale (I), sont choisis parmi les silanes de formule générale (V)
X_{a'}SiR_{b'} V)
dans laquelle X et R sont tels que définis dans les revendications 1 ou 2, R' est un nombre entier valant de 1 à 4, de préférence de 2 à 4, et b vaut 0, 1, 2 ou 3, de préférence 0, 1 ou 2.

11. Procédé de production de polycondensats contenant Si modifiés par des groupes organiques, dans lequel on condense par hydrolyse un ou plusieurs composés de silicium condensables par hydrolyse et le cas échéant d'autres éléments du groupe B, Al, P, Sn, Pb, des métaux de transition, des lanthanides et des actinides et/ou des composés mentionnés ci-dessus, le cas échéant en présence d'un catalyseur et/ou d'un solvant par l'action d'eau ou d'humidité, où de 5 à 100 % molaire, sur la base des composés monomères, des composés condensables par hydrolyse sont choisis parmi les silanes de formule générale (I)
{XₐR_{b}Si[R'(A)_{c}]_{(4-a-b)}}ₓB (I)
dans laquelle les radicaux et indices ont la signification suivante :
X : hydrogène, halogène, hydroxy, alcoxy, aryloxy, acyloxy, alkylcarbonyle, alcoxycarbonyle ou -NR"₂;
R : alkyle, alcényle, alcynyle, aryle, alkylaryle ou arylalkyle;
R' : alkylène, arylène ou alkylènearylène ;
R" : hydrogène, alkyle ou aryle ;
A : O, S, PR", POR", NHC(O)O ou NHC(O)NR" ;
B : représente un radical organique à chaîne droite ou ramifiée, qui dérive d'un composé B' avec au moins une (pour c = 1 et A = NHC(O)O ou NHC(O)NR") ou selon les cas au moins deux doubles liaisons C=C et de 5 à 50 atomes de carbone ;
a vaut 1, 2 ou 3 ;
b vaut 0, 1 ou 2 ;
c vaut 0 ou 1 ;
x représente un nombre entier, dont la valeur maximale correspond au nombre de doubles liaisons dans le composé B' moins 1, ou selon les cas est égal au nombre de doubles liaisons dans le composé B' lorsque c = 1 et A représente NHC(O)O ou NHC(O)NR".

12. Procédé de production d'un vernis de revêtement ou d'une masse à mouler, dans lequel on combine un polycondensat selon l'une quelconque des revendications 1 à 10, ou un polycondensat que l'on peut obtenir selon le procédé de la revendication 11 avec un ou plusieurs catalyseurs pour le durcissement thermique et/ou photochimique, ainsi que le cas échéant un solvant et/ou diluant, qui contient le cas échéant des groupes polymérisables par voie thermique et/ou photochimique.

13. Procédé selon la revendication 12, dans lequel
le solvant et/ou diluant ayant des groupes thermiquement et/ou photochimiquement polymérisables est choisi parmi les composés B', l'acide (méth)acrylique, les éthers d'acide (méth)acrylique d'alcools monovalents, le (méth)acrylonitrile, le styrène, la N-vinylpyrrolidone et leurs mélanges.

14. Procédé selon l'une quelconque des revendications 11 à 13,
dans lequel
on ajoute au polycondensat, de manière supplémentaire, des additifs habituels pour vernis (dans la production d'un vernis de revêtement) ou des charges inorganiques et/ou organiques, ainsi que le cas échéant des adjuvants de traitement (dans la fabrication d'une masse à mouler).

15. Vernis de revêtement ou masse à mouler que l'on peut obtenir selon le procédé de l'une quelconque des revendications 12 à 14.
